# EUROPEAN PATENT SPECIFICATION

(11) **EP 0 450 014 B1**
(45) Date of publication and mention of the grant of the patent: **28.01.1998**
(21) Application number: 90915042.7
(22) Date of filing: 04.10.1990
(51) Int. Cl.: G06T 9/00

(54) **APPARATUS AND METHOD FOR IMAGE DATA TRANSPOSITION AND COMPRESSION/DECOMPRESSION**
GERÄT UND VERFAHREN ZUR BILDDATENUMSTELLUNG UND ZUR KOMPRESSION/DEKOMPRESSION
APPAREIL ET METHODE DE TRANSPOSITION ET DE COMPRESSION/DECOMPRESSION DE DONNEES D'IMAGES

(30) Priority: 10.10.1989 US 419253; 10.10.1989 US 419611; 10.10.1989 US 419778
(43) Date of publication of application: 09.10.1991
(73) Proprietor: UNISYS CORPORATION, Blue Bell, PA 19424-0001 (US)
(72) Inventor: KLEIN, Robert, Farmington, MI 48018 (US); GROSSE, Debora, Y., Ann Arbor, MI 48108 (US); WILDS, Karen, A., Plymouth, MI 48170 (US); D'AOUST, Robert, Detroit, MI 48228 (US); KREBS, Stephen, R., Ypsilanti Township, MI 48197 (US)
(74) Representative: Eisenführ, Speiser & Partner
(86) International application number: US9005672
(87) International publication number: WO9106063

(56) References cited:
- EP-A- 0 113 410
- EP-A- 0 162 503
- EP-A- 0 279 420
- US-A- 4 144 547
- US-A- 4 809 350
- US-A- 4 843 632

## Description

### TECHNICAL BACKGROUND OF THE INVENTION

Financial documents, such as checks or drafts, usually contain a magnetic ink character recognition (MICR) codeline which is typically read by a sorter which automatically sorts these documents into a plurality of bins. Prior to this encoding, in current practice, these documents are physically handled by a plurality of individuals, each of whom enters the dollar amount associated therewith upon each of the documents by the use of specialized amount entry equipment. Additionally, these individuals physically correct errors associated with the reading of the magnetic codeline by entering the correct code upon the document by this amount entry equipment.

These prior techniques of utilizing a plurality of individuals to process financial documents, in the aforementioned manner has proved to be relatively costly and inefficient in that many of these documents have been lost or destroyed during their physical handling, and the speed associated with the processing of the documents is limited to that associated with the processing capabilities of the individuals and the mechanical amount entry equipment used thereby.

EP-A-0 113 410 representing the closest prior art from which the invention proceeds discloses an image processor system which separates line image data from a complex background by analyzing both contrast and shape characteristics of the image data. The conventional system inherently provides image rotations and compression wherein the image data are predicted on the basis of already known pixel values, and a difference is obtained between such a predicted value and the actual pixel value and wherein it is this difference which is compressed by using a string run-length code.

From US-A-4 809 350 a data compression system is further known for use in processing diagnostic image data which uses a predictor to predict future data. The actual data is substracted from the predicted value to obtain data related difference values. The difference values are coded by coding the most prevalent difference by a code other than the least bit code but further coding the most prevalent number by string length coding, with the most common being the coded with a least bit code, and also coding the next most common difference with a least bit code and the subsequent most prevalent differences with sequential least bit codes to provide compression ratios of over 3:1.

### SUMMARY OF THE INVENTION

According to one aspect of the present invention, there is provided a data compression apparatus for compressing image data having a plurality of pixels associated therewith which are arranged in a plurality of columns each being uniquely associated with a single vertical scan of said image and having a plurality of pixel rows associated therewith, each of said pixel rows and pixel columns having unique pixels of said image data therein, each of said unique pixels having a gray-scale value associated therewith, said apparatus comprising a transposer means for storing in a memory means said image data as a plurality of columns of unique pixels of data and for outputting from said memory means said plurality of pixels of data as unique pixels of data associated with a same row of each of said columns of unique pixels of data, further characterized by a prediction means for predicting a gray scale value for each of said unique pixels and for determining a difference value between said predicted gray-scale value and an actual sensed gray-scale value and for assigning a confidence value to each of said pixels based on the differences, and a reorderer means for receiving said confidence values and gray-scale difference values and for reordering said difference values according to their associated confidence values most likely to be the same value and storing them in a high confidence portion of a buffer memory means as reordered data for increasing the run lengths of identical pixel and enhancing the compression of the output of said data compression apparatus.

According to a further aspect of the present invention, there is provided a method for the compression of digitized video image data, said image data containing a plurality of pixels each having gray-scale values associated therewith, characterized by the steps of:
a) supplying said plurality of pixels to a prediction means;
b) predicting a gray-scale value of each of said plurality of pixels;
c) subtracting said predicted gray-scale value from said actual gray-scale value of each of said pixels wherein a plurality of difference values are generated;
d) assigning a confidence value to each of said difference values;
e) reordering said difference values according to their associated confidence values most likely to be the same value and storing them in a high confidence portion of a buffer memory means as reordered data for increasing the lengths of identical pixel;
f) generating run length encoded counts defined by said reordered difference values; and
g) supplying said generated run length encoded counts to a Huffman encoder wherein said digitized video image data is further compressed.

According to a still further aspect of the present invention, there is provided a data decompression apparatus for decompressing compressed image data having a plurality of pixels associated therewith, each of said plurality of pixels having a previously predicted and an actual gray-scale value associated therewith, said apparatus comprising a Huffmann decoding means for Huffmann decoding said compressed image data, a run generator for examining the decoded Huffmann values and outputting a serial bit stream, said data decompression apparatus being characterised by a decompressor front end means for formatting the serial bit stream into rows of two-bit reordered prediction differences, a prediction means receiving said compressed data for generating said predicted gray-scale value of each of said plurality of pixels and for determining a difference value between said predicted gray-scale value and said actual gray-scale value of each of said plurality of pixels and for assigning a confidence value to each of said pixels based on the differences, a reorderer means receiving said rows of two-bit reordered prediction differences from said decompressor front end means and confidence values from said prediction means for storing rows of pixels into one of at least two buffer memory means, means for reading stored pixel prediction differences from the other of said at least two buffer memory means at pixel addresses depending on the associated confidence values while storing said rows of pixels into the one memory, feed-back means for feeding-back said reordered prediction difference values to said predicition means, wherein said prediction means comprises a gate means for performing an Exclusive-OR operation between said difference values and associated prediction table address contents to produce decompressed output data on an output means.

Finally, according to a still further aspect of the present invention, there is provided a method for the decompression of compressed image data having a plurality of pixels associated therewith, each of said plurality of pixels having a previously predicted and an actual gray-scale value associated therewith, comprising the steps of Huffmann decoding said compressed image data, examining the decoded Huffmann values by a run generator and outputting a serial bit stream, formatting the serial bit stream into rows of two-bit reordered prediction differences, in a prediction means generating said predicted gray-scale value of each of said plurality of pixels and determining a difference value between said predicted gray-scale value and said actual gray-scale value of each of said plurality of pixels and assigning a confidence value to each of said pixels based on the differences, on the basis of said rows of two-bit reordered prediction differences and confidence values from said prediction means, storing rows of pixels into one of buffer memory means, reading stored pixel prediction differences from the other of said memory means at pixel addresses depending on the associated confidence values while storing said rows of pixels into the one memory means, feeding-back said reordered prediction difference values to said predicition means, and wherein in said prediction means an Exclusive-OR operation between said difference values and associated prediction table address contents is performed to produce decompressed output data on an output means.

According to the preferred embodiment of the invention, a transposition, compression and decompression apparatus may be created within a single application specific integrated circuit (ASIC) chip having a series of transposition, compression and/or decompression processors associated therewith.

The compression and decompression apparatus of this invention can be configured in either a compressed or a decompressed mode to offer either the compression of acquired video image data and or the decompression of previously compressed image data. The transposer allows for the transposition of acquired image data from vertically scanned columns to horizontal rows which allows the later compression associated therewith to have an approximately 2.5 percent improvement in prediction efficiency over that associated with the compression of the vertically scanned data. Additionally, the transposer filters out additional overscan and underscan pixels, associated with each segment of obtained data.

The compression and decompression apparatus uses Huffman encoding techniques in conjunction with run length encoding, and the reordering thereof, to provide a very efficient and relatively lossless compression of data.

The original compressed image may be stored for later viewing or for archival use or historical purposes.

These and other aspects, features, and advantages of this invention will be more readily understood by the reading of the following detailed description taken in conjunction with the accompanying drawings and claims.

### BRIEF DESCRIPTION OF THE DRAWINGS

For a more complete understanding of the present invention, relative to the advantages thereof, reference may be made to the following detailed description taken in conjunction with the accompanying drawings in which:
FIG. 1 is a block diagram of a typical financial document sorting system containing the compression/decompression apparatus of this invention;
FIG. 2 is a block diagram of the compression/ decompression apparatus shown generally in FIG. 1;
FIG. 3 is an illustration of the prediction window, shown generally in FIG. 2;
FIG. 4 is a block diagram of the transposer, shown generally in FIG. 2;
FIG. 5 is an illustration of the use of transposer, shown generally in FIG. 4;
FIG. 6 is a block diagram of the predictor shown generally in FIG. 2;
FIG. 7 is a block diagram of the reorderer shown generally in FIG. 2;
FIG. 8 is a flowchart describing the operation of the run length counter shown generally in FIG. 2;
FIG. 9 is a flowchart generally illustrating the operation and use of the preferred embodiment of this invention which is shown generally in FIG. 2;
FIG. 10(a-c) are flowcharts detailing the initialization step of the flowchart shown generally in FIG. 9;
FIG. 11 is a flowchart detailing the prediction step shown generally in FIG. 9;
FIG. 12 is a flowchart illustrating the difference step shown generally in FIG. 9;
FIG. 13(a-b) are flowcharts illustrating the reordering step shown generally in FIG. 9;
FIG. 14(a-b) are flowcharts describing the encoding step shown generally in FIG. 9; and
FIG. 15 is a flowchart illustrating the decompression operation associated with the preferred embodiment of this invention which is shown generally in FIG. 2.

### DESCRIPTION OF THE PREFERRED EMBODIMENT

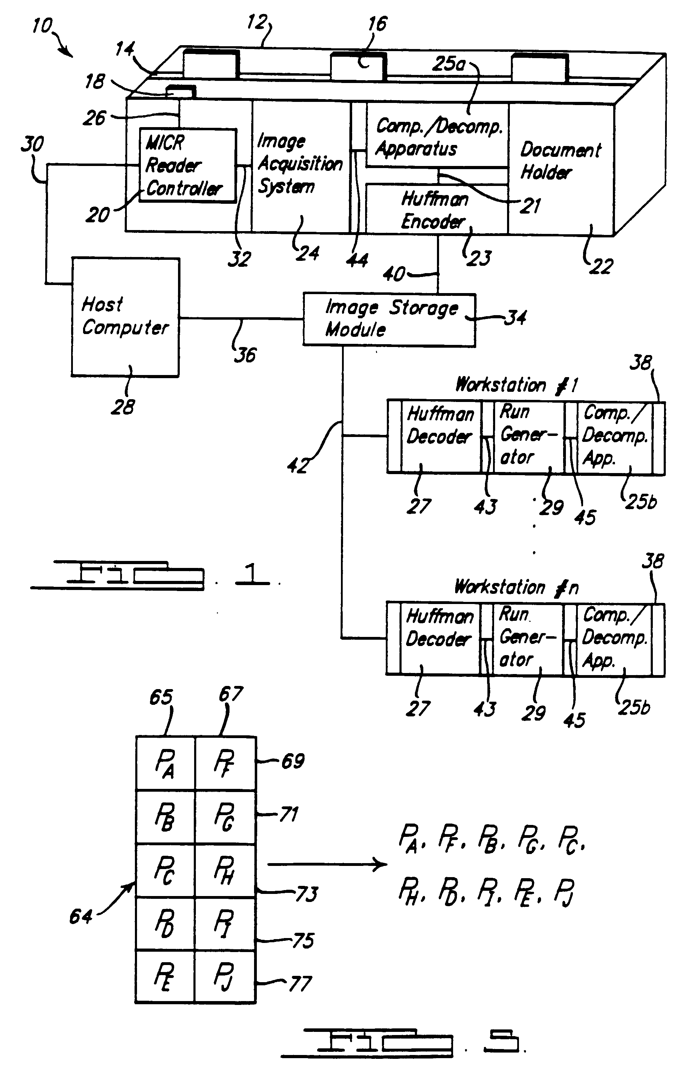

Referring now to FIG. 1, there is shown a financial document sorting system **10** having a typical document sorter **12,** which in the preferred embodiment of this invention, comprises a model DP1800 sorter which is manufactured by the UNISYS Corporation of Blue Bell, Pennsylvania. Sorter **12** contains a track **14** into which a plurality of financial documents **16** traverse through and reside within, and further contains a magnetic ink character recognition (MICR) codeline reader **18** and a MICR reader controller **20**. Additionally, sorter **12** contains a document holder **22**, an image acquisition system **24** (i.e., comprising a plurality of cameras and associated image processing entities), a compression/decompression apparatus **25(a)** (used in this position as a data compressor) arranged in accordance with the teachings of the preferred embodiment of this invention, and a typical Huffman encoder **23.** System **10** further contains a host computer **28,** which controls the general operation of sorter **12,** an image storage module **34**, and a plurality of workstations **38,** each containing the compression/decompression apparatus **25**, a Huffman decoder **27**, and a run generator **29.**

Controller **20** is coupled to the reader **18** by signals on bus **26**, to host computer **28** by signals on bus **30,** and to the image acquisition apparatus **24** by signals on bus **32**. The compression/decompression apparatus **25**, within sorter **12,** is coupled to the image acquisition system **24** by signals on bus **44** and to the Huffman encoder **23** by signals on bus **21.** The image storage module **34** is coupled to the Huffman encoder **23** by signals on bus **40,** the host computer **28** by signals on bus **36,** and to the Huffman decoder **27,** within each of the workstations **38** by signals on bus **42.** Each decoder **27**, is coupled to an associated run generator **29** by signals on bus **43,** while each run generator **29** is coupled to an associated apparatus **25(b)** by signals on bus **45.**

It should be noted the apparatus **25(a)** is substantially equivalent to apparatus **25(b)** and that apparatus **25(a)** and apparatus **25(b)** may both be used for compression or for decompression. The selection of this function is by means of a jump selector. It should further be noted that Huffman encoding is typically used to compress image data and is well known to practitioners in the art. For a description of Huffman encoding the reader is directed to pages 528-531 of "An Introduction to Statistical Communication Theory" (1969) authored by John B. Thomas and published by John Wiley and Sons, Inc.

In operation, documents **16** sequentially traverse by reader **18** which reads a typical magnetic code appearing upon the magnetic MICR codeline which is normally placed upon each of the documents **16.** This code is then sent to the computer **28,** by signals on bus **30,** for storage therein and to image acquisition system **24**.

As each of the documents **16** further travel within the track **14**, they pass in close proximity to system **24** which acquires an image of them, preferably using a plurality of replicated image capture channels. This image is then processed by a plurality of image processing operations (performed within system **24)** and these operations typically produce a final processed digital image having a plurality of pixels therein, each pixel being represented by approximately two bits of data. This digitized image is then sent to apparatus **25(a)** by signals on bus **44.** Apparatus **25(a)** then compresses the received digitized image and subsequently sends the compressed image to the encoder **23** by signals on bus **21**. Encoder **23** then encodes the compressed data and sends it to the image storage module **34** by signals on bus **40.** After passing system **24,** each of the documents **16** are then sorted and held within the document holder **22**.

After a typical block of the documents **16** have been sorted in the aforementioned manner, the workstations **38**,by signals on the bus **42,** sequentially request the aforementioned stored document images from the storage module **34.** These encoded and compressed images are then downloaded to the workstations **38,** by use of signals on the bus **42,** along with their associated magnetic code data originally obtained from host computer **28**. Within each workstation **38**, the encoded and compressed images are decoded by decoder **27** and the decoded image is sent to generator **29** by signals on bus **43.** Generator **29** then transmits a binary coded run length for each decoded Huffman value to the apparatus **25(b)** (used at this location as a data decompressor) by signals on bus **45.** Apparatus **25(b)** then receives the binary coded run lengths and decompresses the decoded image therefrom for display to the operator of workstations **38.**

After these images are displayed by the workstations **38,** individual operators electronically enter the viewed dollar amount associated with each document and electronically resolve any difficulties associated with the reading by reader **18**, of the MICR codeline thereon. Each image's dollar amount, and its associated corrections then form a single computerized record which is then sent to the storage module **34,** by use of signals on the bus **42,** where it may be later accessed for use in automatically placing the dollar amount and corrections upon the sorted documents.

The aforementioned document sorting system **10,** therefore, substantially eliminates the physical handling of the plurality of documents **16** which had previously been involved with the placement of the associated dollar amount thereon, thereby increasing the efficiency and timeliness of the overall document sorting system **10.**

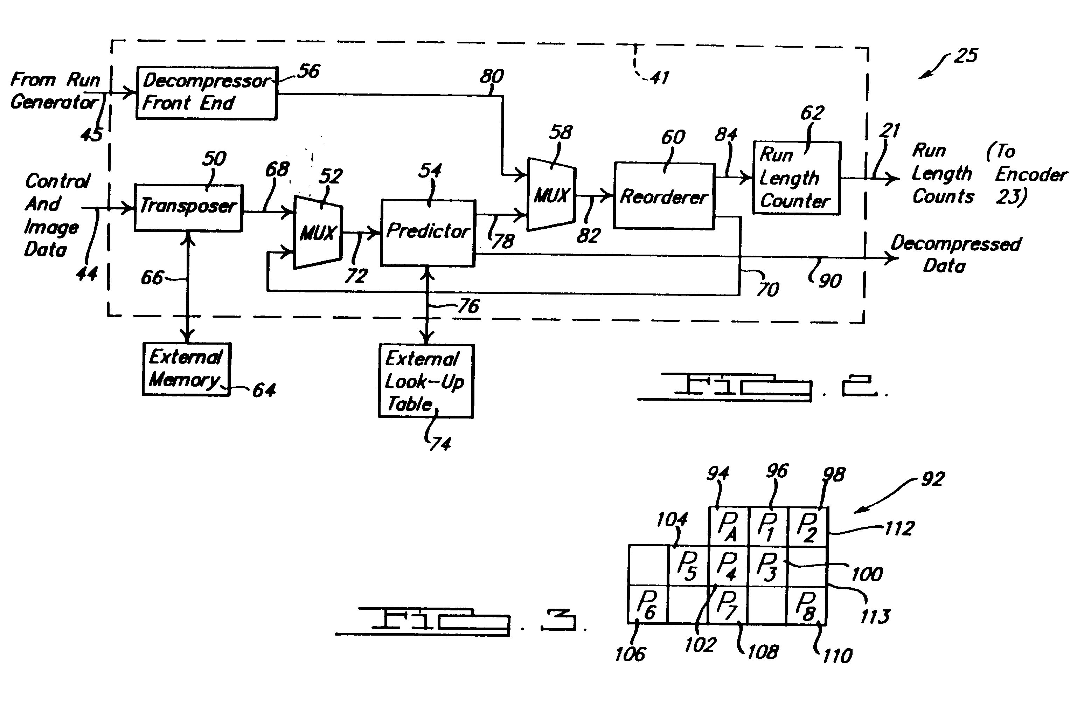

Referring now to FIG. 2, there is shown the compression and decompression apparatus **25(a)** or **25(b)** (designated as **25** in FIG. 2) arranged in accordance with the principles of this invention, and including a transposer **50**, a multiplexer **52**, a predictor **54,** a decompressor front end **56,** a multiplexer **58,** a reorderer **60** and a run length counter **62.** Entities **50, 52, 54, 56, 58, 60** and **62,** in the preferred embodiment of this invention, comprise a single application specific integrated circuit (ASIC), whose components are shown within the dashed line **41** of FIG. 2.

Transposer **50** is coupled to memory **64** by signals on bus **66** and is further coupled to the multiplexer **52** by signals on bus **68** while concurrently receiving acquired image data and control data upon signal on bus **44.** In this embodiment, memory **64** is located on a motherboard mounting the ASIC, but is external to the ASIC. Multiplexer **52** has its other input coupled to a first output of the reorderer **60** by signals on bus **70** and has an output signal on bus **72** which is coupled to the input of the predictor **54.** The input of predictor **54** is further coupled to an externally placed lookup table **74** by signals on bus **76** and has an associated output signal on bus **78** which is coupled to a first input of the multiplexer **58.**

The multiplexer **58**, has a second input coupled to the decompressor front end **56** by bus **80** and has its output coupled to the reorderer **60** by bus **82.** Reorderer **60** has one of its outputs coupled to the run length counter **62** by bus **84.** Lastly, the decompressor front end **56** has its input coupled to a run length generator **29** by signals on bus **45**. The output of counter **62**, represented by signals on bus **88,** will typically be coupled to the Huffman encoder **23** by signals on bus **21** and the predictor **54** further has an output signal on bus **90** which is the decompressed data associated with the data on bus **45**.

Generally, in compression operation of unit **25**, the image data to be compressed, which is represented by signals on bus **44,** is input into the transposer **50** and is then placed thereby into the external memory **64** by signals on bus **66.** Thereafter, control signals on bus **44** are input into the transposer 50 to direct transposer **50** to strip off undesired rows of pixels that may be present within an image due to channel overscan operations which are used to reduce processing errors by adding data to the top and the bottom of each of the acquired image channels. Additionally, control signals on bus **44** cause transposer **50** to re-order the pixels of the acquired image (which are input thereto as vertical pixel scanned image lines) into horizontal pixel scan lines. This is done, since it has been shown that subsequent compression in a horizontal manner results, in one embodiment, in an approximate 2.5% improvement in prediction efficiency over that associated with the vertical pixel scan line compression.

That is, it has been found that the discontinuity at the beginning and end of each line (i.e., either horizontal or vertical) of pixel image data is approximately 2 pixels wide. It has further been found that, for typical financial documents each of the acquired images, in one embodiment, is approximately 825 pixels long (i.e., in a horizontal direction) and approximately 88 pixels high (i.e., in a vertical direction). Assuming that one predicts in the vertical direction, there will be (4 x 825) or a total of approximately 3,300 imprecisely predicted pixels. If, however, the prediction precedes horizontally, there will only be (4 x 88) or approximately 352 imprecisely predicted pixels. Since it is known that there are approximately 105,600 total pixels within an acquired image, the difference between 352 and 3,300 represents an approximate 2.5% improvement in prediction accuracy relative to the compression of horizontal pixel image data as opposed to the compression of vertical pixel image data.

Additionally, compression of data along a horizontal row allows run lengths to have a maximum value which may be defined to be up to the overall length of the row. This is substantially longer than the maximum value of the run lengths associated with the pixel columns of the acquired image, thereby allowing for greater efficiency in the typical Huffman encoding techniques used upon the run lengths associated with signals on bus **21,** by encoder **21** (FIG. 1).

Once the acquired image data has been transposed and filtered by transposer **50** (in the general manner previously specified), transposer **50** then sends this transposed image data from memory **64** to the multiplexer **52** by signals on bus **68.** The multiplexer **52** then outputs the same image data into the predictor **54** by the signals on bus **72**. The predictor **54** then reversibly remaps pixel values represented by the signals on bus **72** in order to improve compressibility associated therewith. That is, the predictor **54** chooses the most probable gray-scale value for each pixel of the received image based upon the gray-scale level of its neighboring pixels and finds the difference value between the aforementioned predicted gray-scale value and the actual pixel gray-scale value. The predictor **54** then substitutes this difference value for the actual pixel gray-scale value thereby outputting the same to the reorderer **60** by the use of multiplexer **58** and signals on the bus **82**.

Specifically, the predictor **54** performs this task by passing a prediction window over the transposed gray-scale image of pixels represented by signals on the bus **72** and then outputs the bits in the window to a lookup table **74** (mounted externally of the ASIC) **41** by signals on bus **76.** The external lookup table contains a previously derived prediction state table (to be later explained) and upon receipt of the bits on the bus **76,** sends back (along the same bus **76**) to the predictor **54** the resultant predicted gray-scale value and confidence value associated therewith. This predicted gray-scale value and confidence value are associated with a single pixel in the window, which is termed the "active pixel". Each pixel in the acquired image is predicted in the aforementioned manner by being defined as the "active pixel" at some point in the image prediction process. This confidence value is also sent to the reorderer **60** by the co-operation of buses **76, 78,** and **82**.

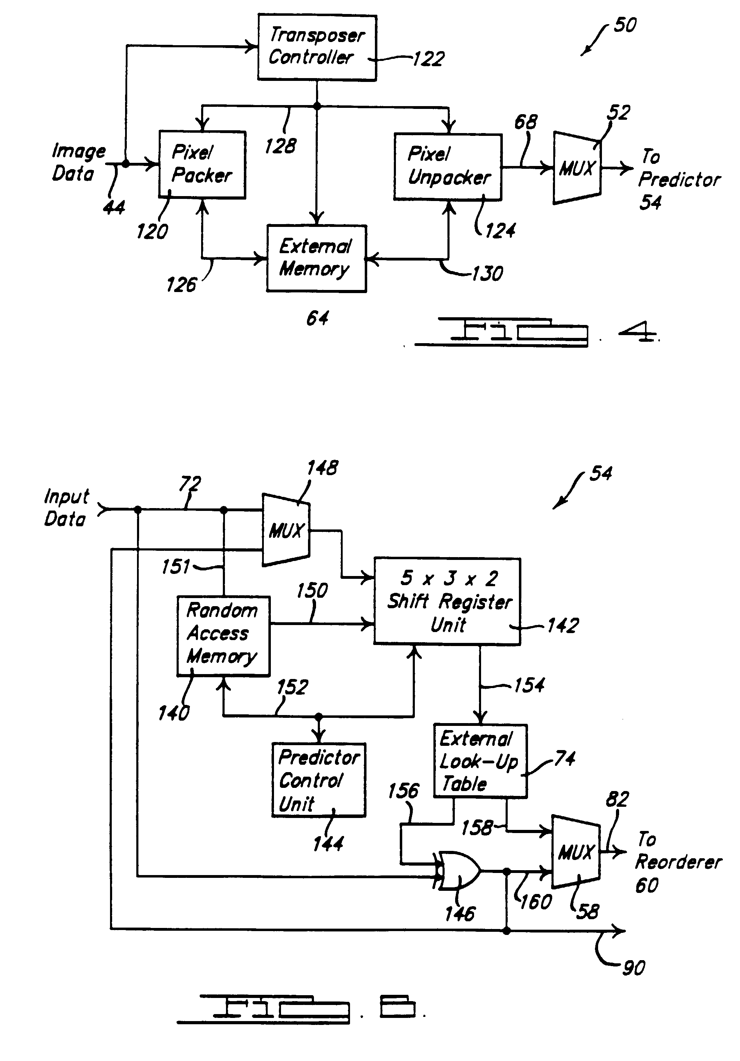

The window **92** used by the predictor **54** is shown generally in FIG. 3 as containing the active pixel ("P_{A}") denoted as **94** which is to be predicted and further contains image pixels **96, 98, 100, 102, 104, 106, 108** and **110.** Image pixels **96, 98, 100, 102, 104, 106, 108**, and **110** are used to predict the gray-scale value of the active pixel **94** by the usual concatenation thereof. The prediction window **92** is configured in the present form such that it is unbiased in any of the associated prediction directions, since the window **92** has the same number of window pixels **96, 98, 100, 102, 104, 106, 108**, and **110** in the vertical, horizontal, or diagonal direction relative to the active pixel **94**. Further, each pixel **96, 98, 100, 102, 104, 106, 108,** and **110** is comprised, in one embodiment, of two bits of gray-scale data and the window **92** is made to fill in values having a gray-scale level of "white". The physical location of the active pixel **94** prevents all of the pixels **96, 98, 100, 102, 104, 106, 108,** and **110** from being defined within the acquired image (i.e., pixel **94** is one of the edge pixels of the acquired image). This is particularly useful in the decompression of the data since the use of the gray-scale level of "white", as a "filler" value, represents a known starting condition. This is especially true at the beginning of each of the lines **112** of the acquired image. Because the compressed image must be able to be decompressed, the prediction window **92** contains only pixels **96, 98, 100, 102, 104, 106, 108,** and **110** physically preceding in the prediction process, within the acquired image, the pixel **94** currently being predicted. Therefore, pixel **94** is predicted based upon known (i.e., previously processed) pixels **96, 98, 100, 102, 104, 106, 108,** and **110** values and may be "depredicted" (for decompression purposes) from these known pixel **96, 98, 100, 102, 104, 106, 108,** and **110** values as well.

The reorderer **60,** upon receiving the predicted difference values and associated confidence values, which are represented by signals on bus **82,** increases the probability of long type runs and hence compressibility, by gathering together prediction difference values likely to be zero. The reorderer **60** arranges each row of prediction difference values by moving prediction difference values having a high confidence value to one end of a buffer and prediction difference values having a low confidence value to the other end of the buffer contained therein. This reordering of prediction difference values, when combined with the definition of runs as being generally a plurality of zeros between each pair of ones (or alternatively the number of zeros preceded by a one), increases the length of the runs and thusly increases the efficiency of the compressibility of the image data. This reordering of prediction difference values is then input to the run length counter **62,** by means of signals on bus **84**, and counter **62** which then computes run lengths and then outputs an associated run length count on bus **21** to the Huffman encoder **23.** That is, since these zeros represent a null prediction difference, they will greatly outnumber the occurrences of the "ones" (inaccurate prediction) if the prediction associated with predictor **54** is consistently accurate. Therefore, by placing the most frequently occurring prediction difference value types (i.e., zeros) together and allowing runs to be defined by the sequential number thereof, it has been found that longer type runs have been created.

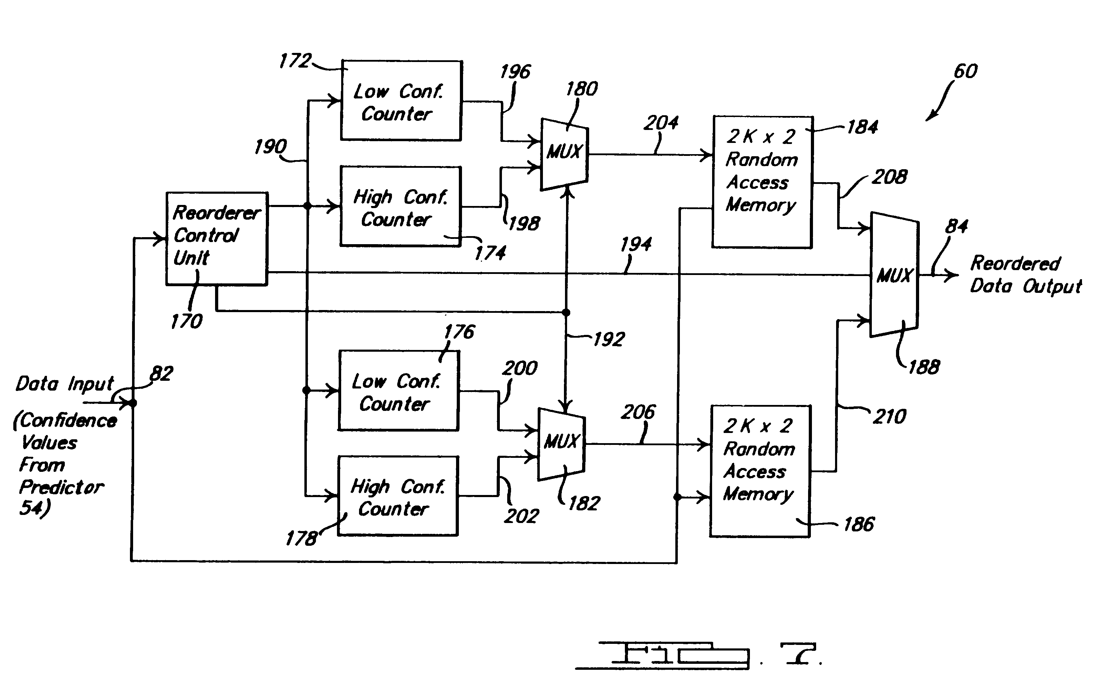

Referring now to FIG. 4, there is shown details of the transposer **50** of FIG. 2 as containing a pixel packer **120,** a transposer controller **122,** and a pixel unpacker **124.** Specifically, the acquired image data, represented by signals on bus **44,** is input into pixel packer **120.** Pixel packer **120** is further coupled to memory **64** (which is mounted external to the ASIC) by bus **126** and to the transposer controller **122** by bus **128.** The pixel unpacker **124** is coupled to the external memory **64** by bus **130** and is coupled at an input thereof to the transposer controller **122** by bus **128.** Pixel unpacker **124** further has an output represented by signals on bus **68** which is input into multiplexer **52.**

In operation, the acquired image data represented by the signals on the bus **44** is input into the pixel packer **120** which, in one embodiment, contains typical memory storage for one pixel having two data bits associated therewith and also contains a typical memory read and write controller coupled thereto. When a first pixel enters packer **120,** by bus **44,** packer **120** stores the same therein. When a second, and subsequent, pixel enters packer **120**, both it and the stored first pixel are output to the external memory **64** by bus **126**. This continues until all the acquired image data upon bus **44** has been packed and sent to memory **64.** At this time, the memory **64** contains the data associated with the image in substantially the same arrangement as it was received by the packer **120** (i.e. in vertical image scanned segments).

External memory **64,** in one embodiment, comprises a typical "first in first out" (FIFO) memory and a typical random access memory (RAM) coupled thereto. Data received on bus **126,** from packer **120,** comprising the first vertical column of an acquired image are temporarily stored in the FIFO. When the first two pixels associated with the second column of the image are output by pixel packer **120** onto bus **126** and then to the FIFO, the first two pixels from the first column of image data are pushed out of the FIFO and these four pixels (8 bits) are then sent to the random access memory and stored in memory locations specified by the transposer controller **122** and which are transmitted to the random access memory, of memory **64**, by signals on bus **128.** Controller **122,** by signals on bus **122,** further enables the random access memory, of memory **64**, to receive and transmit data as well.

The pixel unpacker **124** comprises a typical eight bit data register (in one embodiment) which is used to store a byte of data which is read from the RAM of memory **64.** Pixels contained within the register of unpacker **124** are then selected by the transposer controller **122,** by bus **128,** to be placed on bus **68** and then to the multiplexer **52**. These pixels are first placed within the register of unpacker **124** by the directive of controller **122.** That is, controller **122** places a write command and the associated address, whose contents are to be output, to the random access memory of the memory **64,** by signal on bus **128.** Memory **64** then places the contents at the defined address to the register of the unpacker **124** by bus **130** and this data is temporarily stored therein until it is output to multiplexer **52.**

Controller **122,** defines the data to be output to unpacker **124** as being contained in memory locations of the random access memory which correspond to horizontal "slices" of the image. That is, the stored image data is read such that pixels are output in a pattern corresponding to horizontal scans of all of the vertical columns of contained data. In one embodiment, this is done by the controller **122** counting the numbers of rows in the stored data within the memory **64** and then sequentially requesting these rows to be output therefrom.

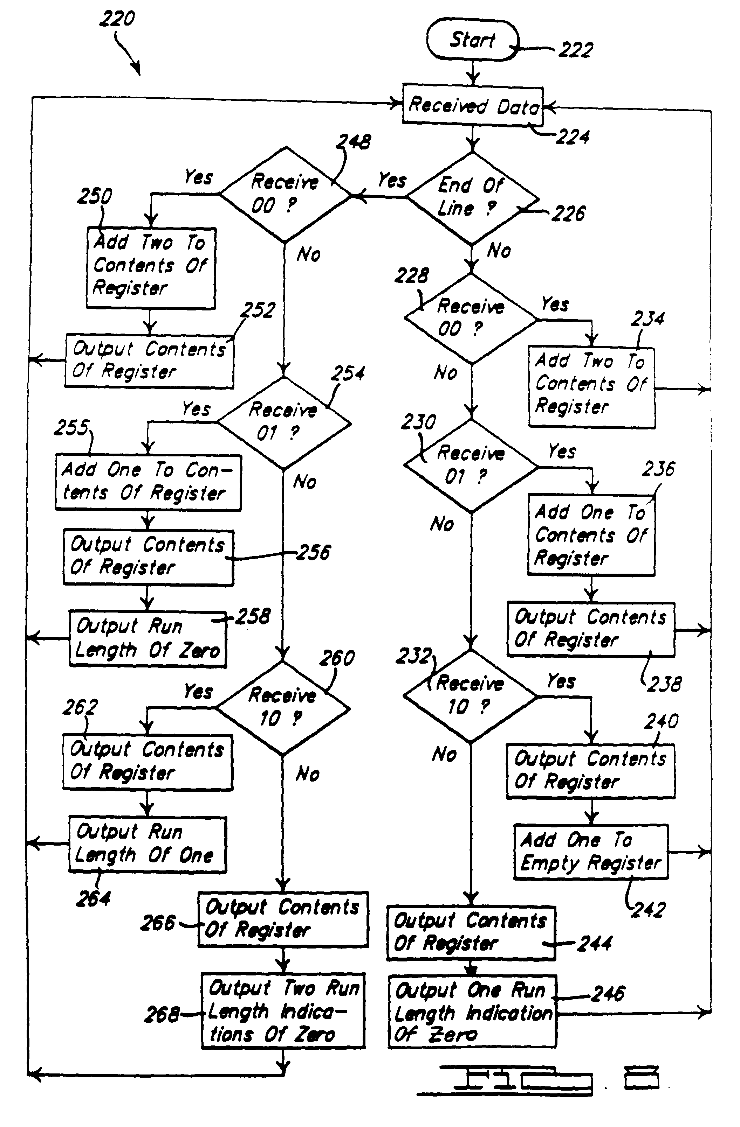

To illustrate the transposition process, reference is now made to FIG. 5 in which is shown the external memory **64** as initially containing pixels "P_{A}", "P_{B}", "P_{C}", "P_{D}", "P_{E}", P_{F}", "P_{G}", "P_{H}", "P_{I}", and "P_{J}" associated with vertical scans **65** and **67** of image data and placed therein by packer **120** through bus **126**.

Specifically, pixels "P_{A}", "P_{B}", "P_{C}", "P_{D}", and "P_{E}" are associated with scan column **65** while pixels "P_{F}", "P_{G}", "P_{H}", "P_{I}", and "P_{J}" are associated with scan column **67.**

In the aforementioned transposition process, the transposer controller directs memory **64** to output pixels in the following sequence: "P_{A}", "P_{F}", "P_{B}", "P_{G}", "P_{E}", "P_{H}", "P_{D}", "P_{I}", "P_{E}", and "P_{J}" thereby outputting pixels within rows 69, 71, 73, 75, and 77, respectively, and which are horizontal pixel "slices" of the acquired image.

Additionally, controller **122** contains an overscan counter which enables the pixel packer **120,** by signals on bus **128**, to begin the aforementioned operation on a vertical column **65, 67** of image data only when the number of acquired image pixels, equal to the contents of the overscan counter, have initially appeared upon bus **44**. This allows the apparatus **10** to ignore "extra" rows of pixels which were added to the beginning of every column **65, 67** by acquisition system **24** as overscan. This filtering out of overscan pixels allows the subsequent compression of the image data to be more efficient. Additionally, it should be noted that since packer **120** outputs data to memory **64** after every other pixel upon bus **128** and since unpacker **124** only needs to read from memory **64** once for every two pixels, both the reading and writing to and from the memory **64** occur concurrently, in the preferred embodiment of this invention. This concurrency of operation keeps the data processing throughput substantially high.

These obtained horizontal rows **69, 71, 73, 75** and **77** of pixels are then output from pixel unpacker **124,** by signals on the bus **68**, to multiplexer **52**. It should be noted that multiplexers **52** and **58** are typically jump connected such that they allow a predefined input signal (i.e. either input signals on buses **68** or **78** (FIG. 2); or input signals on buses **70** or **80**) to be respectively output therefrom. Thus, this transposed pixel data represented by signals on the bus **68** after being input to multiplexer **52** are subsequently output therefrom as signals on bus **72** to predictor **54** (FIG. 2).

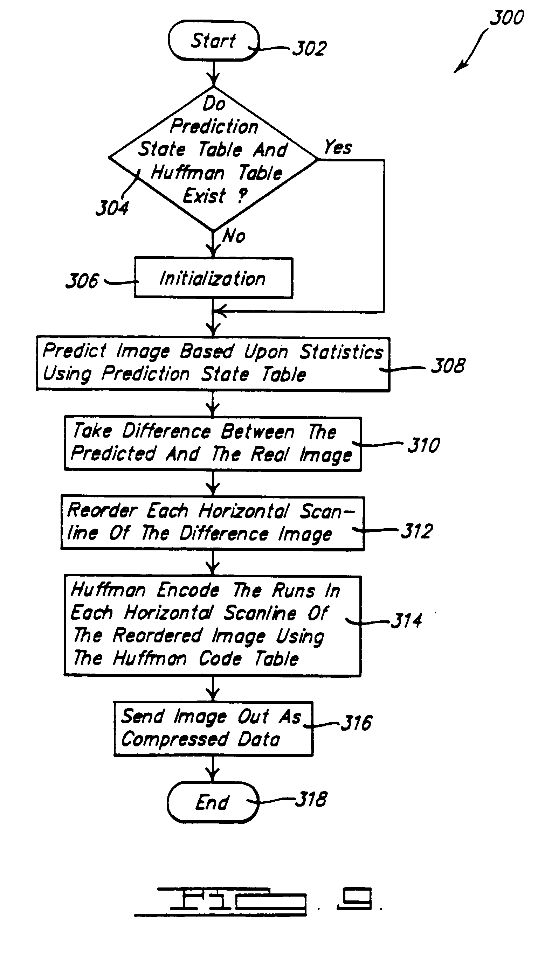

Referring now to FIG. 6, there is shown details of the predictor **54** of FIG. 2 as containing a random access memory **140,** a 5x3x2 bit shift register unit **142,** a predictor control unit **144,** an Exclusive-OR gate **146,** and a multiplexer **58**.

Memory **140** is coupled, by bus **150,** to assembly **142** and by bus **152** to predictor control **144.** Bus **152** further couples assembly **142** to predictor control **144**. Lookup table **74** is coupled to assembly **142** by bus **154,** to an input of the Exclusive-OR gate **146** by bus **156**, and to the input of multiplexer **58** by bus **158.**

The Exclusive-OR gate **146** has its output coupled to multiplexer **58** and to multiplexer **148** by bus **160** and has another of its inputs coupled to bus **72** (FIG. 2). Bus **72** is also coupled to multiplexer **148.**

In operation, random access memory **140** is made to be an extension of shift register assembly **142** by bus **150**. Pixel image data from bus **72** is initially stored in row **112** of window **92** (FIG. 3) and is also stored in memory **140** through bus **151.** After a time delay, the contents of memory **140** are sequentially placed in the second row **113** of the window **92** (FIG. 3) which is contained in unit **142** and shifted through unit **142**. This shifting then generates a plurality of prediction table addresses which are placed upon bus **154** to table **74** (which is external to the ASIC). A 5x3x2 bit shift register unit, in one embodiment, is used since each pixel **94, 96, 98, 100, 102, 104, 106, 108,** and **110** (FIG. 3), in this embodiment, contains only two bits of data and because the window **92** is defined in the configuration as shown in FIG. 3 as capable of being stored as a 5x3 pixel matrix.

These prediction table addresses are received by the external lookup table **74** which causes a previously stored predicted gray-scale value associated with the active pixel **94** to be output on to the bus **156** to the Exclusive-OR gate **146** and further causes an associated confidence bit value to further be output therefrom and represented by signals on bus **158**.

The input data associated with signals on bus **72** is further coupled to the Exclusive-OR gate **146** such that the input data is logically combined with its predicted value on bus **156** thus causing gate **146** to output a prediction difference value on bus **160.** This prediction difference value is input along with its associated confidence bit value on bus **158** to multiplexer **58** and subsequently to reorderer **60** (FIG. 2) by signals on bus **82.**

When the ASIC and associated external elements of FIG. 2 are being used for decompression purposes, the input data on bus **72** represents predicted differences generated in compression. Performance of an Exclusive-OR operation upon the predicted difference associated with signals on bus **72** and the predicted value on bus **156** produces an output on bus **160** which recreates a pixel from the original image and thus may be used for decompression. Multiplexer **148** allows the input data upon bus **72** to enter the shift register unit **142** and memory **140** in order to allow prediction differences to be generated, onto bus **160,** in the aforementioned manner for compression and also, alternatively, allows the placement of the recreated pixel (used in decompression), which is on bus **160,** into unit **142** such that it may be used by window **92** (FIG. 3) in order to predict the next pixel by using it to address the table **74** (by bus **154**) and to produce a prediction upon bus **156** to gate **146** thereby recreating another pixel in the manner set forth above. Bus **160** is further coupled to bus **90** and allows the decompressed pixel to be output from predictor **54** in the arrangement shown in FIG. 2.

Deprediction is therefore performed based upon the values of the previously depredicted pixels in shift register unit **142** in a recursive fashion. Therefore, if an error occurred during the transmission of the compressed image to predictor **54,** every pixel following the location of the error would be corrupted. Predictor control unit **144** therefore creates prediction groups in order to limit this damage during the compression of the acquired image on bus **72.** Additionally, the first pixel, in decompression, is decompressed based upon the aforementioned known pixels having a gray-scale value of "white" associated therewith since there are no known decompressed pixels to be used prior to this decompression.

That is, in this embodiment, prediction control unit **144** (during compression) counts the number of rows of pixels which are input into unit **142** and after every **16** rows of pixel data have been processed, in the aforementioned manner, within unit **142,** reinitializes the contents of unit **142** such that window **92** (FIG. 3) is brought to a known state (i.e. pixels **96, 98, 100**, **102, 104, 106, 108,** and **110** are given known values). Control unit **144** then inserts an end of group code which is sent upon bus **60** and eventually to the Huffman encoder **23** (FIG. 1) where it is encoded within the compressed image. During decompression, control unit **144** recognizes each of the end of group commands (which are placed on bus **72**) and causes the assembly **142** to be reinitialized thereby.

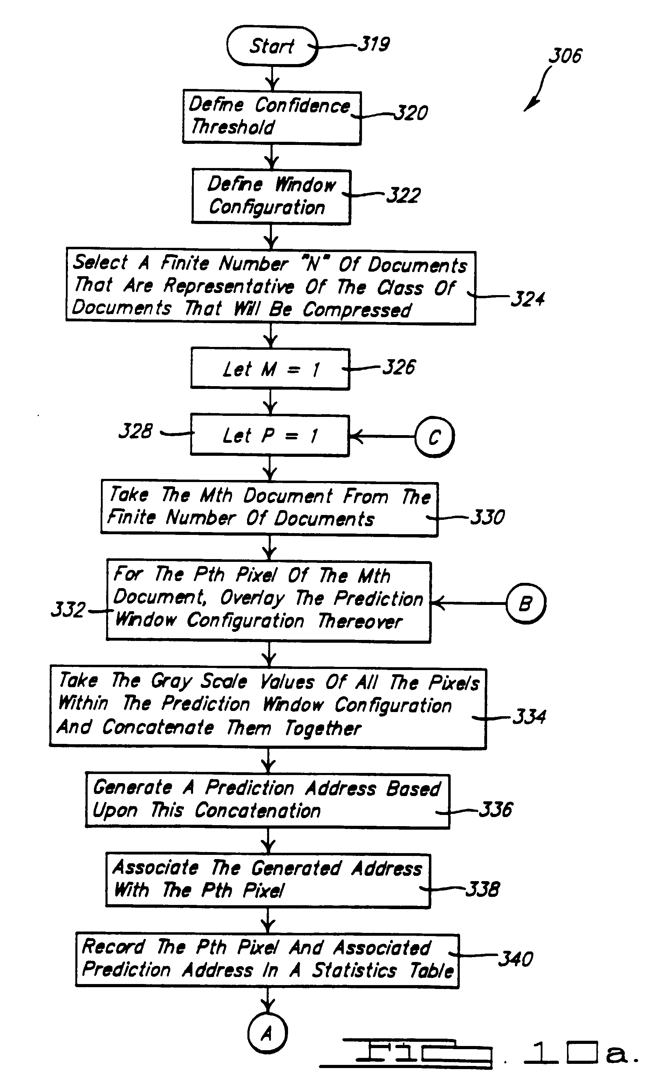

Referring now to FIG. 7, there is shown details of the reorderer **60** of FIG. 2 as containing reorderer control unit **170,** a low confidence counter **172,** high confidence counter **174,** low confidence counter **176,** high confidence counter **178,** multiplexers **180** and **182,** 2Kx2 bit, in one embodiment, random access memories **184** and **186,** and multiplexer **188.** Specifically, the reorderer control unit **170** is coupled to counters **172, 174, 176** and **178** by bus **190** and is further coupled to multiplexers **180** and **182** by bus **192**. Further, reorderer control unit **170** is coupled to multiplexer **188** by bus **194.**

Counters **172** and **174** are coupled to multiplexer **180** by buses **196** and **198** respectively. Counters **176** and **178** are coupled to multiplexer **182** by buses **200** and **202** respectively. Multiplexers **180** and **182** respectively produce outputs on buses **204** and **206** which are respectively input into the memories **184** and **186**. The memories **184** and **186** further, each produce an output on buses **208** and **210** respectively, which are both input into multiplexer **188.** The multiplexer **188** produces an output signal on the bus **84** which is then input into a run length counter **62** (FIG. 2) Further, the confidence values associated with signals on the bus **82** are input into reorderer control unit **170,** while the actual output data, on bus **82,** associated with predictor **54** is input into random access memories **184** and **186.**

In compression mode operation, the first row of pixels associated with signals on the bus **82** are written in a typical manner into the random access memory **184**. In the preferred embodiment of this invention, counter **172** has an initial value of approximately 2,047 (in order to address all "2K" locations of memory **184**) while counter **174** has an initial value of approximately zero. As each pixel enters reorderer **60,** on bus **82,** its confidence bit value (also on bus **82**) is examined by reorderer control unit **170** and if the confidence value is a logical one, the associated data is written to memory **184** at locations specified by the counter **174** through signals on bus **198** and multiplexer **180.** This address then is input into memory **184** by signals on bus **204.** Reorderer control unit **170** permits this passing of address information by counter **174** to random access memory **184** by an address select signal on the bus **192.**

Alternatively, if the incoming pixel data on bus **82** has a logically low confidence bit value associated therewith, then it is made to be written to another section of random access memory **184** identified by the output of counter **172**. That is, the output of the counter **172** is represented by signals on the bus **196** and is input into the multiplexer **180**. Reorderer control unit **170**, then by address select signals on bus **192,** causes multiplexer **180** to place signals upon bus **204** having the same value as the signals on the bus **196** and this causes the memory **184** to place the associated data on signals on the bus **82**, to the address specified by the counter **172** therein.

Every time the contents of the counter **174** are placed by multiplexer **180** upon signals on bus **204** the counter **174** is incremented. Additionally, every time signals on bus **196** are input into memory **184** the counter **172** is decremented. The aforementioned incrementation and decrementation of counters **174** and **172** are controlled by reorderer control unit **170** in a typical manner by signals on bus **190.** This aforementioned process continues until a row of prediction differences has been written to memory **184.**

The counters **176, 178;** multiplexer **182;** and memory **186** are arranged to work in a co-operative arrangement which is substantially similar to the aforementioned co-operation of the counters **172** and **174** with the multiplexer **180** and memory **184.** These counters **176** and **178,** multiplexer **182,** and memory **186** are used after the random access memory **184** has received a complete row of prediction difference values. This allows for the random access memory **186** to be filled while data is output from the random access memcry **184.** This data output is represented by signals on bus **208** to multiplexer **188**. Alternatively, after the random access memory **186** has received a complete row of prediction differences, its contents are output and this output is represented by signals on the bus **210** to the multiplexer **188.** The reorderer control unit **170** defines which of the input signals on buses **208** and **210** are placed upon signals on bus **84** by multiplexer **188** by use of the typical address select signals on bus **144** thereto and also determines when memories **184** and **186** contain a complete row of predicted difference data by receiving a typical "end-of-scan" signal from transposer **50**.

Hence, in the compression operation, the data is output to the run length counter **62** (FIG. 2) by signals on bus **84** according to the confidence values obtained from predictor **54** which were input into reorderer **60** by signals on buses **82.** The run length counter **62** then generates typical run length counts associated with this reordered data and places these counts on signals on buses **21** to the Huffman encoder **23** (FIG. 1). It has been shown that this reordering of data into "high confidence" and "low confidence" segments associated with random access memories **184** and **186** has resulted in relatively longer runs and a more efficient Huffman compression and coding since the reordered data allows for longer runs. The compression operation of this invention is lossless (i.e., virtually no data is lost in the compression process).

In one embodiment of this invention, the reorderer control unit **170** comprises a sequential state machine which examines the confidence values on bus **82** and issues one of two outputs as a result thereof to counters **172** and **174** or to counters **176** and **178.** Additionally, unit **170**, by the confidence values, controls the output of multiplexers **180** and **182** and, based upon the receipt of an "end-of-scan" signal from transposer **50,** knows when the memories **184** and **186** have a row of prediction differences therein. Additionally, unit **170** places pixels from memories **184** and **186** onto buses **208** and **210** in order of increasing addresses (specified by signals on buses **204** and **206** respectively). That is, pixels having an address of zero are read first and pixels having an address defined by the maximum values of counter **172** and **176** are read last in the embodiment of this invention.

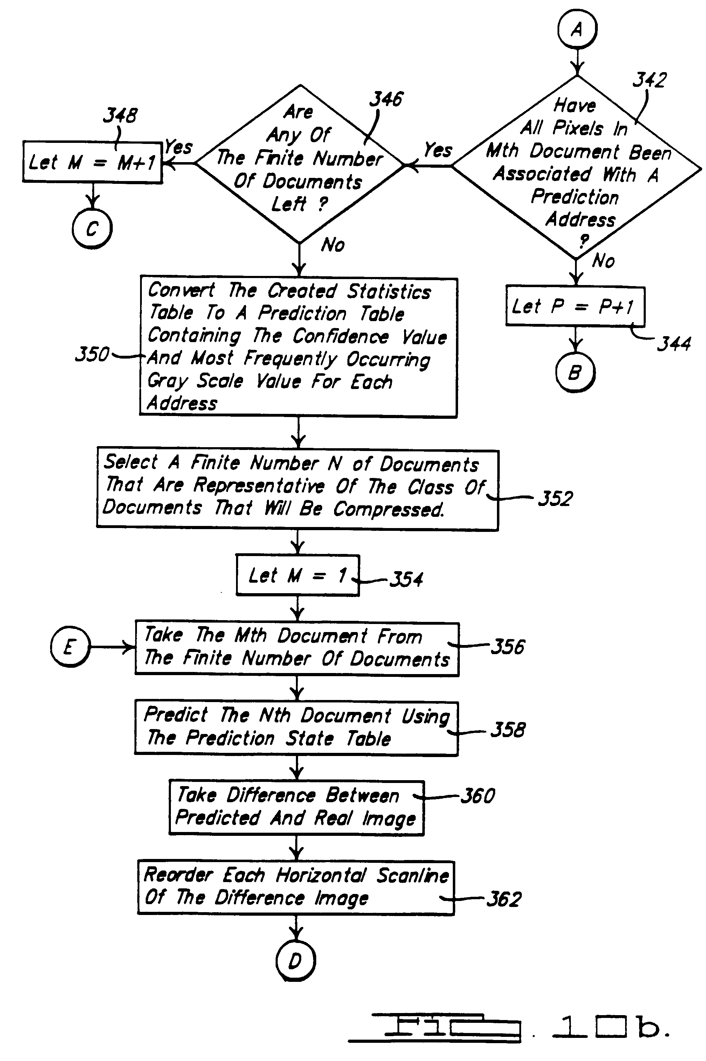

Referring now to FIG. 8, there is shown a flowchart **220** which describes the operation associated with the run length counter **62** of FIG. 2 which, in the preferred embodiment of this invention, is a sequential state machine. After the beginning step **222,** clearing a run length register to zero, is completed, the run length counter **62** in step **224** is made to receive reordered prediction difference value data received by signals on bus **84** (FIG. 2). Each pixel associated with the acquired image is made to contain two bits of a prediction difference value associated therewith. Thus, the run length counter 62 is made to accept two bits of reordered prediction difference value data via signals on bus **82.**

After receiving two bits of prediction difference value data in step **224,** the run length counter **62** enters step **226** which requires it to determine if these two bits of prediction difference value data received in step **224** represents the last bits in a line of data associated with the transposed image of transposer **50** (FIGS. 2-4). If these two bits of predicted difference value data do not represent the end of the line, then run length counter **62** is made to make the determinations of the actual values associated with the received predicted difference value data and to compare this observed value in the steps **228-232**.

That is, if the received difference value data comprises two logically low bits, then step **228** requires that step **234** be immediately followed thereby which requires the addition of two to the contents of a run length counting register by counter **62.** This is done since run length counter **62,** in this embodiment, is made to count the number of consecutive zeros following each one in the received difference value data associated with signals on the bus **84.** After step **234** has been completed, then the run length counter **62** is directed back to the step **224** in order that it may receive two new bits of data via the bus **84.**

If the determination in step **228** is that the difference value data does not comprise two logically low bits, then step **228** is followed by step **230** which requires the run length counter **62** to determine if the received difference value data comprises a logically low bit followed by a logically high bit. If the determination in step **230** is affirmative, then the run length counter **62** enters step **236** thereafter in which it is directed to add one to the contents of the run length counting register and thereafter, in step **238** to output the contents of this run length counting register on bus **88.**

Step **238** is then followed by step **224** which requires the run length counter **62** to receive two new bits of difference value data along signals on bus **84.** If the determination in step **230** is negative, then step **232** is made to immediately follow therefrom and which requires the run length counter **62** to determine if the two bits of received difference value data comprise a logically high bit followed by a logically low bit. If this determination is affirmative, then the run length counter **62** is directed to the step **240** immediately thereafter.

Step **240** requires run length counter **62** to immediately output the contents of its run length counting register onto bus **88** and then to enter step **242** which requires run length counter **62** to add one to its now empty register. Step **242** is immediately followed by step **224** which requires the run length counter **62** to receive two new bits of difference value data by signal on bus **84.**

If the determination in step **232** is negative, then the run length counter **62** is immediately directed to the processing of step **244** which requires the run length counter **62** to output the contents of its run length counting register onto bus **88** and thereafter, in step **246,** to output a run length of zero onto bus **88.** Step **246** is then followed by step **224** which requires the run length counter **62** to received two new bits of prediction difference value data.

If the determination in step **226** is that the received error data associated with step **224** represents an end of line, then the run length counter **62** is immediately directed to process step **248** which requires the run length counter **62** to determine if the received difference value data is represented by two logically low bits. If the result of the determination is step **248** is affirmative, then the run length counter **62** is directed in step **250** to add two to its run length counting register and then immediately thereafter, in step **252,** to output the contents of this run length counting register to signal on bus **88** and return to step **224.**

If the determination associated with step **248** is negative, then the run length counter 62 is directed to process step **254** thereafter which requires the determination if the received difference value data comprises a logically low bit followed by a logically high bit. If the determination of step **254** is affirmative, then the run length counter **62** is directed to process step **255** which requires counters **62** to add one to its register and thereafter to process **256** immediately, which directs the run length counter **62** to immediately output to the contents of its run length counting registers onto bus **88**. Step **256** is followed by step **258** which requires the run length counter **62** to additionally output a run length of zero onto bus **88**. Step **258** is following by step **224** which requires the run length counter **62** to receive two new bits of difference value data.

Should the determination in step **254** be negative, then the run length counter **62** is directed to immediately process step **260** thereafter which requires the run length counter **62** to determine if the received difference value data comprises a logically high bit followed by a logically low bit. If the determination involved in step **260** is affirmative then the run length counter **62** is directed to immediately process step **262** thereafter which requires the run length counter **62** to immediately output the contents of its run length counting register onto bus **88** and thereafter to process step **264.** Step **264** then requires the run length counter **62** to output a run length of one onto bus **88** and clear the register. Step **264** is followed by step **224** which requires the run length counter **62** to receive two new bits of difference value data.

Should the determination involved in step **260** be negative, then the run length counter **62** is directed to process step **266** immediately thereafter which requires the immediate output of the contents of its run length counting register onto bus **88** and which to process step **268** thereafter. Step **268** requires the run length counter **62** to output two run lengths indications, each having a value of zero, onto bus **88**. Step **268** is then followed by step **224** which requires the run length counter **62** to receive two new bits of difference value data by signals on bus **84**. It should be noted that the run length register is cleared, after all steps of flowchart **220,** requiring an output therefrom.

In decompression, as mentioned earlier, the overall objective is to obtain compressed data which is present as an input signal on bus **42** and cause this compressed data to be decompressed. This decompressed data should then represent substantially the same image as was seen before the aforementioned compression took place. In the decompressor operation mode (i.e., in any of workstations **38** of FIG. 1), the compressed data is received by the typical Huffman decoder **27** where it is decoded and sent to run generator **29**, by bus **43.** Run generator **29,** a sequential state machine (in one embodiment of this invention) then examines each of the decoded Huffman values and outputs on bus **45**, a run comprising a logical one followed by a number of zeros equal to the binary number represented by the decoded Huffman value. This logical one which is used as the first bit in all runs, also allows the decompressor front end **56** to detect errors associated therewith. The binary data is received by the decompressor front end **56** by signals on the bus **43** and is input into the multiplexer **58** by signals on the bus **80**.

Generally, the decompressor front end **56** formats the serial bit stream of the data on bus **45** into rows of two-bit reordered prediction differences. The serial stream of two-bit differences is then input onto bus **80** and input to multiplexer **58** (FIG. 2) which has previously been jumpered (by grounding predetermined pins of the ASIC) into a decompression configuration and which then outputs these signals on bus **80** to signals on bus **82** and then to reorderer **60.**

Specifically, the decompressor front end **56** is, in one embodiment, a sequential state machine and receives bits in a serial stream from the run generator **29** by bus **45** and discards the first bit from every line. The decompressor front end **56** then formats each pair of succeeding bits into two bit pixels and passes these pixels to the reorderer **60** through the co-operation of buses **80** and **82** and multiplexer **58** (FIG. 1).

The decompressor front end **56** also contains a counter which is initialized, by a user of apparatus **25**, with the scan line length. This counter decrements each time the decompressor front end **56** outputs a two bit pixel therefrom. When this counter reaches zero, the front end outputs an end of line signal to reorderer **60** and the counter reinitializes or resets. The decompressor front end **56** also passes the aforementioned encoded end of group codes, obtained from the encoder and decoded by decoder **27** (FIG. 1), to the reorderer **60**.

The decompressor front end **56** also checks for errors which might have occurred during the transmission or storage of the compressed data by comparing the first bit of every line with a logical one. If these values aren't equal, the decompressor front end **56** knows that an error has occurred. Similarly, decompressor front end **56** checks the contents of its counter when an end of group signal is received from the run generator **29,** by bus **45**. If the counter isn't zero, at this time, then another error condition is discovered. These errors may be transmitted to an error processor externally positioned from apparatus **25**. The end of group signal is transmitted to the reorderer **60** by buses **80** and **82** (FIG. 2) for the aforementioned use thereby.

In the reorderer **60,** during decompression, a first row of pixels is then written into the random access memory **184** (FIG. 7) upon receipt of the signals on buses **80** and **82** from the decompressor front end **56**. The counter **172** generates the address for these pixels counting up from a predefined initial state of zero. When a complete line of pixels has been written into memory **184,** counter **172** is held at its current value by assembly **170** and the counter **174** is cleared to zero. Then, while the next line of pixels is being written into the random access memory **186** (FIG. 7), as previously described, the first line of pixels is read from random access memory **184**. If the confidence value for a pixel, within the line that is being read is logically high, then the pixel is read from the location indicated by the value of the counter **174** and the counter **174** is incremented by assembly **170**. If the confidence value associated therewith is substantially zero, the pixel data is read from the address indicated by counter **172,** in a manner previously specified, and the counter **172** is decremented by assembly **170.** With reference to FIG. 2, these confidence values are input to assembly **170** by predictor **54** through bus **78** during the decompression.

The output associated with signals on bus **84** (FIG. 2) is completed when the counter **172** (FIG. 7) is substantially equal to the counter **174** and when the counter **176** is substantially equal to the counter **178.** This output signal on bus **84** is then input to bus **70** and subsequently is an input into the multiplexer **52** which has been previously jumpered to output the signals on bus **70** onto bus **72** and then to predictor **54.**

The predictor **54** then couples signals on bus **72** to the Exclusive-OR gate **146** (FIG. 6) and performs an Exclusive-OR operation upon the associated prediction table address contents with the data represented on signals on bus **72** to produce decompressed data on signal bus **90**, in the manner previously described. This decompressed data is then outputted from predictor **54** via bus **90** and substantially corresponds to the previously uncompressed image.

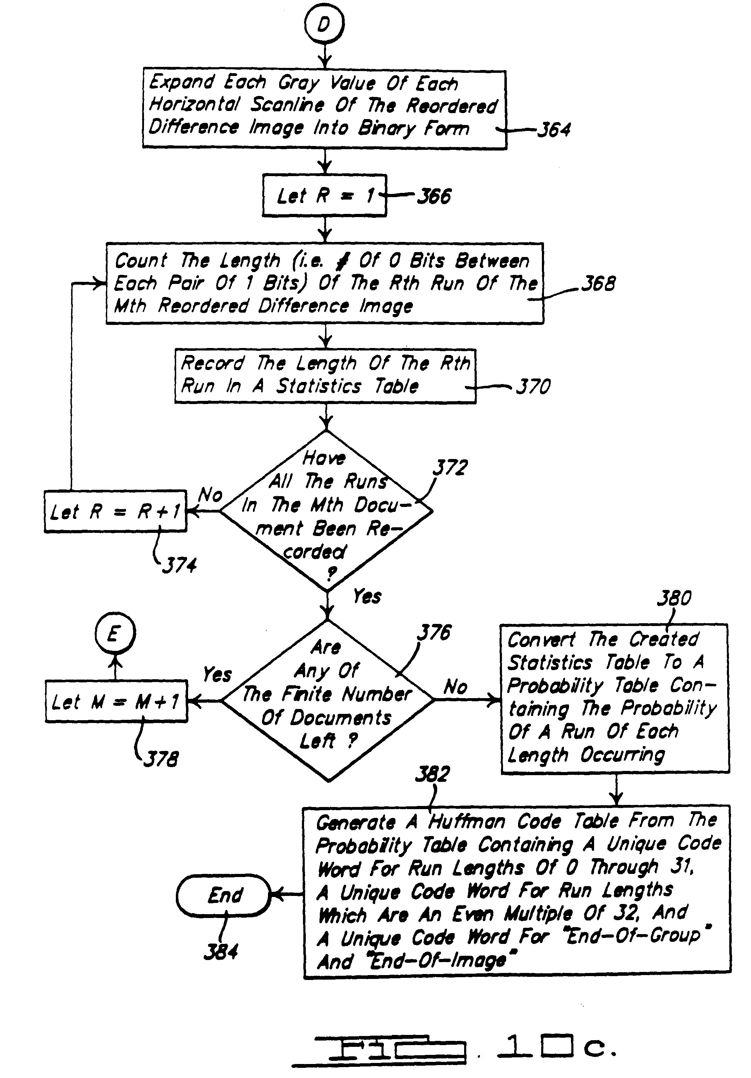

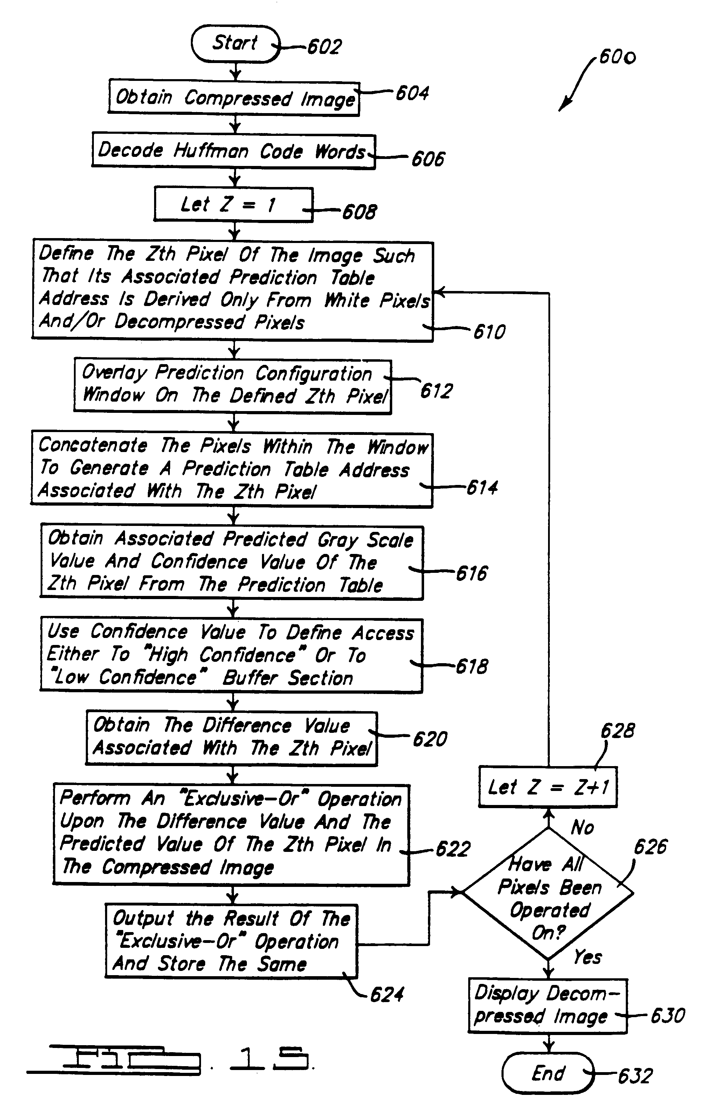

The compression operations associated with apparatus **25** may be more clearly described with reference to FIGS. 9-14, while the decompression operation associated with apparatus **25** may be more fully described with reference to the flowchart shown in FIG. 15. Specifically, flowchart **300** of FIG. 9 details the general initial sequence of operations associated with the use of apparatus **25** in a compression operation. That is, after the initial step **302** has been completed, step **304** is entered which requires an operator of apparatus **25** to determine if a prediction state table and Huffman table exist. If such a prediction state table and Huffman table don't exist, then step **304** is followed by step **306** which requires a user of apparatus **25** or a typical designer to perform an initialization function.

If the prediction state table and Huffman tables already exist, then step **304** is followed by step **308** (which follows step **306** as well). Step **308** requires apparatus **25** to predict what the image will look like based upon statistics using a prediction state table. After step **308** is completed, apparatus **25** is directed to perform step **310** which requires the taking of a difference between the predicted and the real image. Step **312** then follows step **310** and requires apparatus **25** to reorder the difference (of step **310**) in accordance with a predetermined confidence factor. The reordering associated with step **312** is followed by step **314** which requires apparatus **25** to encode the string associated with the difference of step **312** in a conventional Huffman coding arrangement. Step **314** is followed by step **316** which requires apparatus **25** to send the compressed image out as compressed data and step **316** is followed by step **318** which defines the end of the sequence of operations associated with apparatus **25** and the user therewith.

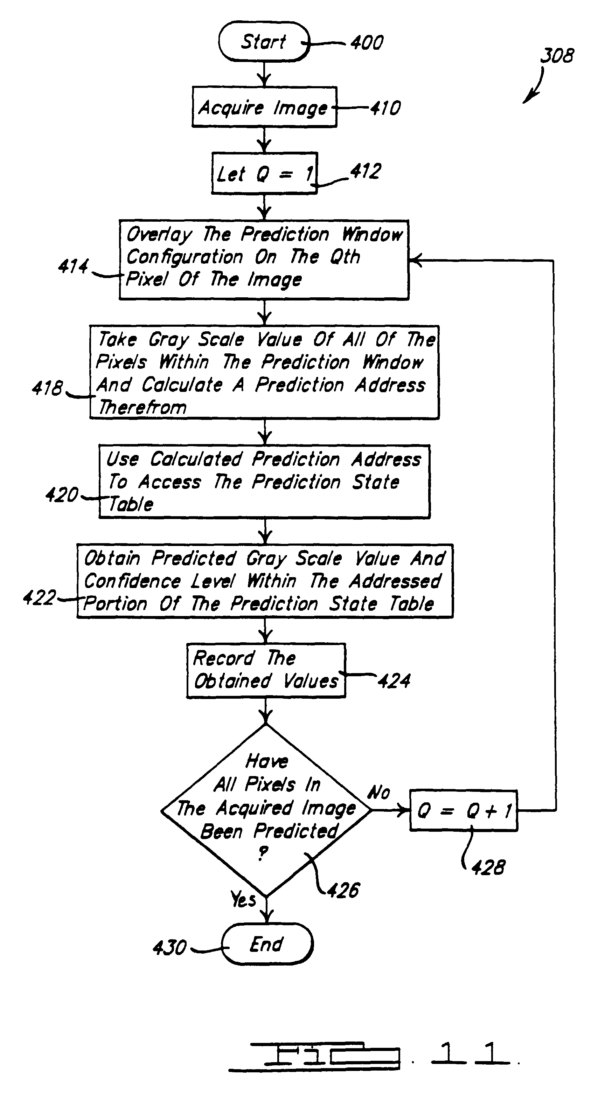

Reference is now made to FIGS. 10(a-c) which detail the steps associated with the initialization step **306,** of flowchart **300** of FIG. 9. Specifically, the initialization sequence associated with step **306** requires an initial step **320** which requires the user of apparatus **25** to define a confidence threshold below which a confidence level associated with the predicted value will be "low". Next, a user of apparatus **25** must, in the step **322,** define an appropriate window configuration which will be used in the coding algorithm. As seen earlier, in FIG. 3, the window configuration used in the preferred embodiment of this invention results not only in the ability to decompress an obtained image, but also is substantially unbiased in all directions.

After a window configuration is defined by a typical user or designer of apparatus **25,** in step **322,** the next step **324** requires a user of apparatus **25** to select a finite number "N" of documents that are representative (in image) of the class of documents that will be compressed. That is, if apparatus **25** is used to compress check documents, then some number of check type document images must be utilized or identified in this initialization process. Steps **326** and **328** simply initialize two variables denoted as "M" and "P" which are presented here simply for explanatory purposes only.

The next step **330** requires the user of apparatus **25** to select the document associated with the variable "M" from the finite number of documents that were selected in step **324.** Step **332** follows step **330** and requires the apparatus **25,** for the pixel identified by the variable "P" which is within the document identified by the variable "M", to overlay the prediction window which was defined in step **322** thereover.

This is followed by step **334** which requires apparatus **25** to take the gray-scale value of all the pixels within the prediction window configuration and concatenate them together in a previously specified manner. This is done in the predictor stage **54** (FIG. 2). Step **336** then requires the predictor **54,** of apparatus **25,** to generate a prediction address based upon this concatenation. Step **338** follows step **336** and simply requires apparatus **25** to associate the generated address with the pixel. This again is done, as previously described, in predictor **54.** Step **340** follows step **338** and requires the recordation of the predicted pixel and associated prediction address in a standard type statistics table. This is typically done by a user of apparatus **25.**

Step **340** is followed by step **342** which requires a determination if all the pixels in the document identified by the variable "M", have been associated with a prediction address. If this has not been the case, then the associated variable value of "P" is incremented in step **344** and steps **332-342** are again completed by apparatus **25** and a user therewith. If all the pixels in the document identified by the variable "M" have been associated with a prediction address, then step **342** is followed by step **346** which requires a user to determine if any of the finite number of documents, identified in step **324**, is left unprocessed. If there are some documents unprocessed, then step **346** is followed by step **348,** which increases the value of the variable "M" and requires step **348** to be followed by steps **328-346**. If the answer to the question posed in step **346** is negative, then step **346** is followed by step **350** which requires the user of apparatus **25** to convert the created statistics table to a prediction table containing the confidence value associated with step **320**. The prediction value for each address is set to the most frequently occurring gray-scale value for that address. If the frequency of occurrence of the prediction value for that address is greater than the confidence threshold, then the confidence value for that address is set to "high" or a logical one, otherwise "low" or zero.

Step **350** is then followed by step **352** which requires a user of apparatus **25** to select a finite number "N" of documents that are representative of the class of documents that will be compressed. The documents associated with step **352** could be substantially similar to the class of documents associated with step **324.** Step **352** is then followed by step **354** which initializes a counter "M" to one. The counter associated with step **354** could be, in one embodiment, substantially similar to the counter associated with step **326.**

Step **354** is then followed by step **356** which requires apparatus **25** to select the document associated with the variable "M", in step **354**, from the finite number of documents that were selected in step **352**. Step **356** is followed by step **358** which requires apparatus **25** to predict the image of the document defined in step **356** using the prediction state table which was generated in step **350**. Step **358** is followed by step **360** which requires apparatus **25** to take the difference between the predicted image, associated with step **358,** and the real image, associated with the document defined in step **356.**

Step **360** is then followed by step **362** which requires apparatus **25** to reorder each horizontal scan line associated with the difference between the predicted and the real image of step **360**. Step **362** is then followed by step **364** which requires apparatus **25** to expand each gray-scale value of each horizontal scan line of the reordered difference image into binary form. Step **364** is then followed by step **366** which initializes a variable "R", used here for explanatory purposes only.

Step **366** is then followed by step **368** which requires apparatus **25** to count the run lengths associated with the line defined by the variable "R" in step **366** and associated with the reordered difference image of the document defined by the variable "M" in step 356. Step **368** is then followed by step **370** which requires a user of apparatus **25** to record the length of the run associated with step **368** in a statistics table. Step **370** is then followed by step **372** which requires apparatus **25** to determine if all of the runs or line in the document defined by the variable "M", in step **356,** have been recorded.

If the determination in step **372** is that all of the runs in the document associated with the variable "M" have not been recorded, then step **372** is followed by step **374** which requires an incrementation of the variable "R" and step **374** is then followed by step **368.** If the determination in step **372** is that all of the lines associated with the document defined in step **356** has been recorded, then step **372** is followed by step **376** which requires a determination, by a user of apparatus **25**, if any of the finite number of documents associated with step **352** are left. If the determination of step **376** is that there are some documents that are left, then the variable "M" is incremented in step **378** and step **378** is then followed by step **356.** If the determination of step **376** is that all the documents associated with step **352** have been processed, then step **376** is followed by step **380** which requires a user of apparatus **25** to convert the created statistics table to a probability table containing the probability of a run of each length occurring.

Step **380** is then followed by step **382** which requires a user of apparatus **25** to generate a Huffman code table from the probability table, associated with step **380,** and containing a unique code word for run lengths of 0-31, a unique code word for run lengths which are even multiples of **32**, and a unique code word for "end-of-group" and "end-of-image" symbols (in one embodiment). Step **382** is then followed by step **384** which defines the end of flowchart **306.** The aforementioned prediction state table (step **350**) and Huffman table (step **382**) are needed for decompression as well.

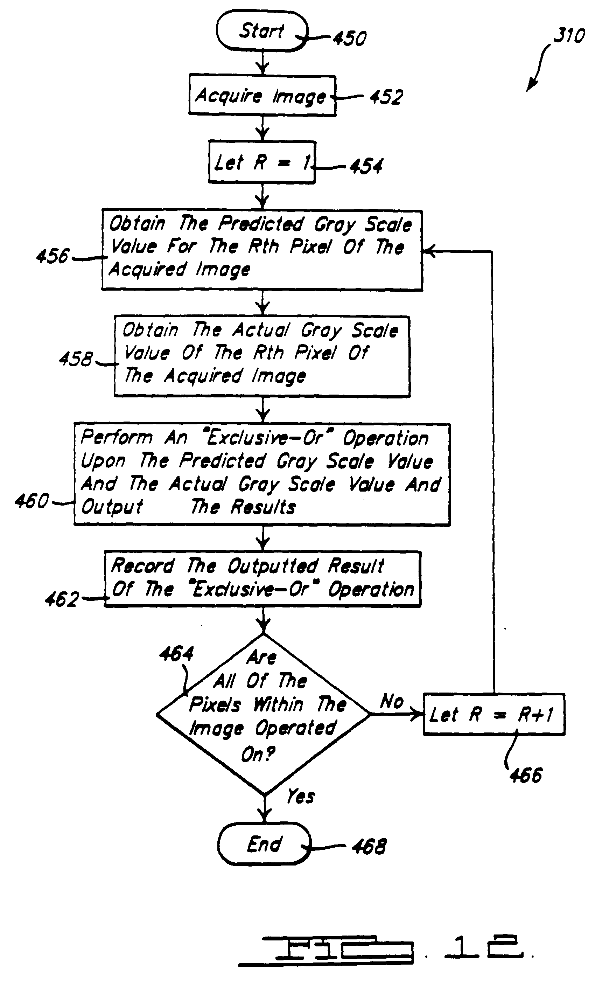

Referring now to FIG. 11, there is shown the requirements of step **308** associated with flowchart **300** of FIG. 9. That is, the initial step **400** is followed by step **410** which requires apparatus **25** to acquire a desired image. Step **410** is followed by step **412** which defines a variable "Q" presented here for explanatory purposes only. Step **412** is followed by step **414** which requires apparatus **25** to overlay the prediction window already specified on the pixel of the image specified by the variable "Q". Step **416** follows step **418** and requires apparatus **25** (i.e. prediction **54**) to take the gray-scale value of all the pixels within the prediction window and then calculate a prediction address therefrom. Step **420** then follows step **418** and requires apparatus **25** to calculate a prediction address to access the prediction state table which has been identified in step 306 (FIGS. 10a, 10b, 10c).

Step **420** is followed by step **422** which requires apparatus **25** to obtain the predicted gray-scale value and confidence level within the address portion of the prediction state table. This is done by the accessing of lookup table **74** (FIG. 2) which, in the preferred embodiment of this invention, contains the prediction state table and which is accessed by predictor **54** by signals on bus **76.**

Step **424** follows step **422** and requires apparatus **25** to record the obtained value of the predicted gray-scale value. In the preferred embodiment of this invention, this obtained value is output by signals on bus **78** from the predictor **54**.

Step **426** follows step **424** and requires the determination if all of the pixels of the acquired image have been predicted. If they have not, then step **426** is followed by step **428** which increments the variable "Q" and requires apparatus **25** to process step **414** thereafter. If the determination of step **424** is that all pixels have been predicted, then step **426** is followed by step **430** defining the end of step **408**.

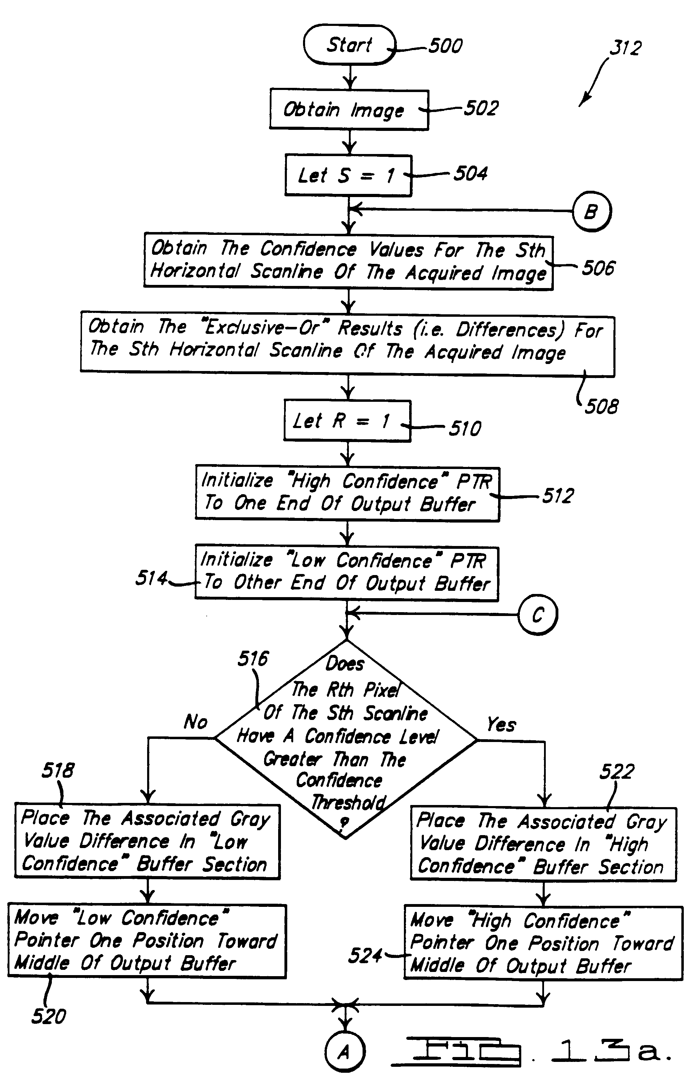

Referring now to FIG. 12, there is shown a sequence of operations associated with step **310** of flowchart **300** (FIG. 9). Specifically the initial step **350** is followed by step **452** which requires apparatus **25** to acquire the desired image. Thereafter, step **454** defines a variable "R" used here for explanatory purposes only and is followed by step **456** which requires apparatus **25** to obtain a predicted gray-scale value for the pixel (defined by the variable "R") of the acquired image.

Step **458** follows step **456** and requires the obtainment by apparatus **25** of the actual gray-scale value of the pixel defined by the variable "R" within the acquired image. Step **460** then requires an Exclusive-OR operation upon the predicted and the actual gray-scale value and outputs the result therefrom. This is done in predictor **54** by use of Exclusive-OR gate **146**. Step **462** then follows step **460** and requires the recordation of the output result of the Exclusive-OR operation. Step **464** follows step **462** and requires the determination if all of the pixels have been operated upon. If they have not, then the variable "R" associated with step **454** is incremented in step **466** and steps **456-464** are repeated. If the determination associated with step **466** is affirmative, then step **468** follows step **464** and which defines the end of step **310**.

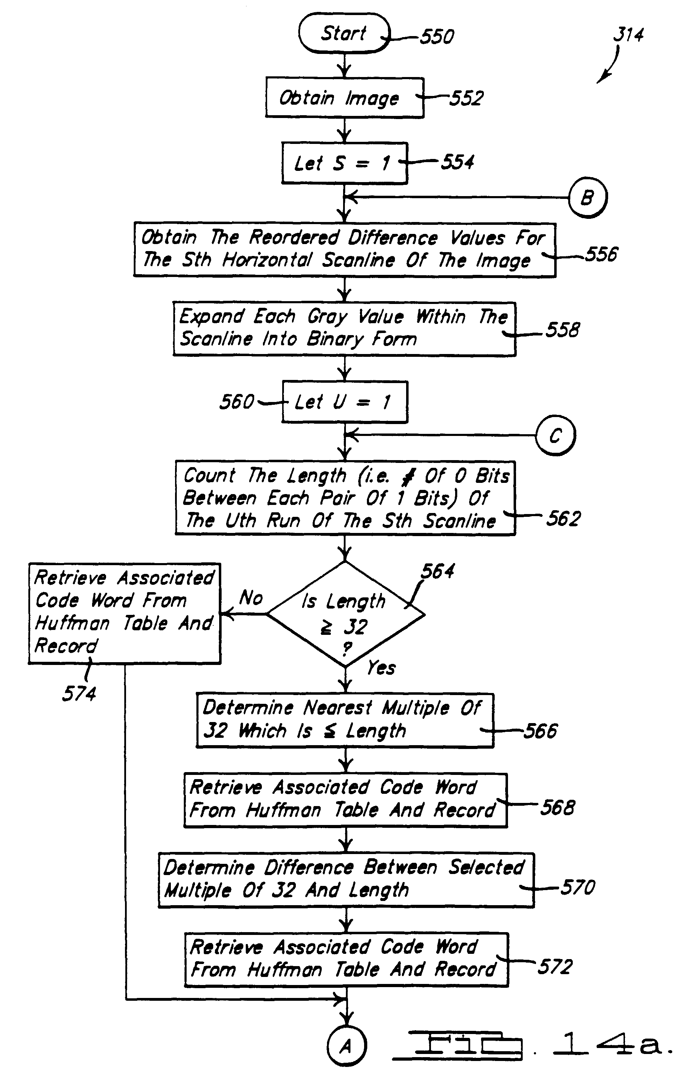

Referring now to FIGS. 13(a-b), there is shown the sequence of steps associated with the reordering step **312** of flowchart **300** (of FIG. 9). This reordering is done, in the preferred embodiment of this invention, by reorderer **60** (FIG. 2). The initial step **500** is followed by step **502** which requires the apparatus **25** to obtain the desired image. Step **504** follows step **502** and defines a variable "S" used here for explanatory purposes only. Step **506** follows step **504** and requires the apparatus **25** to obtain the confidence values for the horizontal scan line associated with the variable "S" of the acquired image. Step **508** follows step **506** and requires the apparatus **25** to obtain the difference for the horizontal scan line associated with the variable "S" of the acquired image. Step **510** follows step **508** and initializes a variable "R", used here for explanatory purposes only.

Step **512** follows step **510** and requires apparatus **25** to initialize the "high confidence" pointer to one end of an output buffer and step **514**, following step **512,** requires apparatus **25** to initialize a "low confidence" pointer to the other end of the same output buffer.

Step **516** follows step **514** and requires the determination if the pixel associated with the variable "R" and within the scan line associated with the variable "S" has a confidence value greater than the confidence threshold, which was predetermined. If apparatus **25** determines that the pixel associated with the variable "R" does not have a confidence value greater than the threshold, then the associated gray-scale value difference of the pixel is placed in a "low confidence" buffer section in step **518.** Step **518** is then followed by step **520** which requires the "low confidence" pointer to be positioned one step closer toward the middle of the output buffer.

If the determination in step **516** is that the pixel does have a confidence value greater than the confidence threshold, then step **516** is followed by step **522** which requires the apparatus **25** to place the associated gray-scale value difference in the "high confidence" section of the output buffer and requires step **524** to immediately follow step **522**. Step **524** requires the movement of the "high confidence" pointer one position toward the middle of the output buffer. Step **526** follows steps **520** and **524** and requires apparatus **25** to determine if all of the pixels in the scan line associated with the variable "S" have been operated upon. If all these pixels have not been operated upon, then step **526** is followed by step **528** which requires an incrementation of the variable "R" and a return to step **516**. If the determination associated with step **526** is that all of the pixels have indeed been operated upon, which are associated with the scan line defined by the variable "S", then step **526** is followed by step **530** which requires the determination if all the horizontal scan lines of the acquired image have been operated upon.

If, in step **530**, it is determined that all of the horizontal lines have been operated upon, then step **530** is followed by step **532** which defines the end of step **312**. If, in step **530,** it is determined that all of the horizontal scan lines have not been operated upon, then step **530** is followed by step **534** which requires an incrementation of the variable "S" and a return to step **506** associated with step **312.**

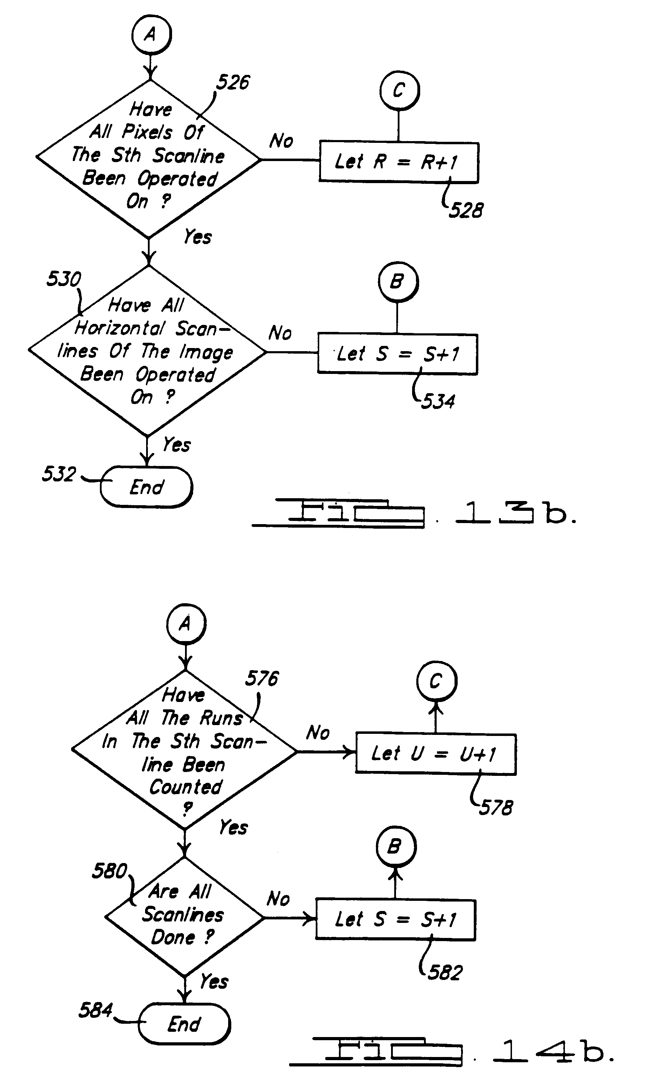

Referring now to FIGS. 14a and 14b, there is shown a sequence of operations associated with step 314 shown in flowchart **300** (FIG. 9). Specifically, step **314** starts with an initial step of **550** followed by step **552** which requires the apparatus **25** to obtain the image. Step **552** is followed by step **554** which initializes the variable "S", used here for explanatory purposes only.

Step **556** follows step **554** and requires the obtainment of the reordered difference values for the horizontal scan line defined by the variable "S" of the obtained image. Step **558** follows step **556** and requires the expansion of each gray-scale value within the scan line into a binary form.

Step **560** follows step **558** and initializes the variable "U", used here for explanatory purposes only. Step **562** follows step **560** and requires the counting of the length of the run defined by the variable "U" associated with the scan line defined by the variable "S". Step **564** follows step **562** and requires if the length, calculated in step **562**, is greater than **32**.

If the length, in step **564** is determined to be greater than **32**, then step **564** is followed by step **566** which requires the determination that the nearest multiple of **32** which less than or equal to the length associated with step **564.** Step **568** follows step **566** and requires the retrieval of the associated code word from a typical Huffman table and record. Step **570** follows step **568** and requires the determination of the difference between the selected multiple of **32** and the overall length. Step **572** follows step **570** and requires the retrieval of the associated code word of this difference in step **570,** from the Huffman table and the recording of it.

If the determination associated with step **564** is negative, than step **564** is immediately followed by step **574** which requires the retrieval of the associated code word from the Huffman table and the recording of it. Step **576** follows both steps **574** and **572** and requires the determination if all the runs in the scan line defined by the variable "S" have been counted.

If all these runs have not been counted, then step **576** is followed by step **578** which requires an incrementation of the variable "U". Step **578** is followed by step **562.** If the determination associated with **576** is affirmative, then step **576** is followed step **580** which requires the determination if all scan line associated with the obtained image have been completed. If all the scan lines have been completed, then step **580** is followed by step **582**, which defines the end of step **314.**

Referring now to FIG. 15, there is shown a flowchart 600 detailing a sequence of steps associated with the decompression of the compressed data shown generally in step **316** in flowchart **300** of FIG. 9. That is, the initial step **602** is followed by step **604** which requires the obtainment of the compressed image by apparatus **25**. Step **606** follows step **604** and requires the obtainment of the Huffman code words associated with the compressed image and the conversion of them to runs of bits, grouping the bits into pixels, then the filling of the reorderer buffers.

Step **608** follows step **606** and defines variable "Z" used here for explanatory purposes only. Step **608** is followed by step **610** which requires apparatus **25** to define the pixel of the obtained image and indicated by the variable "Z" such that its associated prediction table address, which is contained in the external lookup table **74,** is derived only from filler pixels and/or previously decompressed pixels. This is done so that decompression may be accomplished only upon known states and thus be of a high efficiency and relatively error free.

Step **610** is followed by step **612** which requires apparatus **25** to overlay the prediction configuration window of FIG. 3, over the defined pixel. This is done by predictor **54** in the decompression operation as previously explained. Step **614** follows step **612** and requires apparatus **25** to concatenate the pixels within the window to generate the prediction table address associated with the active pixel. Again, in the preferred embodiment of this invention, step **614** is defined by the predictor **54** in the decompressed mode as previously described.

Step **614** is followed by step **616** which requires apparatus **25** to obtain the associated predicted gray-scale value and confidence value of the pixel to be decompressed from the prediction table. Again, in the preferred embodiment of this invention, this is done by use of the predictor accessing the lookup table **74** by signals on bus **76.**

Step **616** is followed by step **618** which requires apparatus **25** to use the confidence value obtained from lookup table **74** to define the access either to the "high confidence" or the "low confidence" buffer section associated with random access memories **184** and **186.** Step **618** is followed by step **620** which requires apparatus **25** to obtain a difference value associated with the pixel to be decompressed and step **620** is followed by step **622** which requires apparatus **25** to perform an Exclusive-OR operation upon a difference value and the predicted value of the pixel to be decompressed. These steps **620** and **622** are accomplished by means of the reorderer **60** and predictor **54** as seen earlier.

Step 622 is followed by step **624** which requires apparatus **25** to output the result of the Exclusive-OR operation and store the same. Step **626** follows step **624** and requires apparatus **25** to determine if all the pixels on the obtained image have been operated upon. If the answer is negative, then step **626** is followed by step **628** which increments the variable "z" and requires step **626** to be followed by steps **610-624.** If the answer to the question in step **626** is affirmative, then step **626** is image have been operated upon. If the answer is negative, then step 626 is followed by step 628 which increments the variable "z" and returns to step 610. If the answer to the question in step 626 is affirmative, then step 626 is followed by step 630 which requires apparatus 25 to display the decompressed image. Step 630 is followed by step 632 which defines the end of flowchart 600.

## Claims

1. A data compression apparatus (25) for compressing image data having a plurality of pixels associated therewith which are arranged in a plurality of columns (65, 67) each being uniquely associated with a single vertical scan of said image and having a plurality of pixel rows (73) associated therewith, each of said pixel rows and pixel columns having unique pixels of said image data therein, each of said unique pixels having a gray-scale value associated therewith,
said apparatus comprising
a transposer means (50) for storing in a memory means (64) said image data as a plurality of columns of unique pixels of data and for outputting from said memory means (64) said plurality of pixels of data as unique pixels of data associated with a same row of each of said columns of unique pixels of data,
further characterized by
a prediction means (54) for predicting a gray scale value for each of said unique pixels and for determining a difference value between said predicted gray-scale value and an actual sensed gray-scale value and for assigning a confidence value to each of said pixels based on the differences, and
a reorderer means (60) for receiving said confidence values and gray-scale difference values and for reordering said difference values according to their associated confidence values most likely to be the same value and storing them in a high confidence portion of a buffer memory means (184, 186) as reordered data for increasing the run lengths of identical pixel and enhancing the compression (23) of the output of said data compression apparatus (25).

2. The apparatus as set forth in claim 1 wherein said transposer means (30) comprises a transposer controller (122) coupled to said memory means (64) for defining one of said associated rows with each of said columns of data and for causing a unique pixel contained in the same row for each of said columns to be outputted to said prediction means (54).

3. The apparatus as set forth in claim 1 or 2 wherein said reorderer means (60) comprises a reorderer controller (170) coupled to said buffer memory means (184, 186) for receiving said difference values and said associated confidence values from said prediction means (54) and for placing each of said difference values in said buffer memory means (184, 186) at locations therein determined according to said associated confidence values.

4. The apparatus as set forth in claim 3 further comprising a run length counter means (62) coupled to the output of said reorderer means (60) for generating a plurality of run length encoded counts as defined by said reordered differences.

5. A method for the compression of digitized video image data, said image data containing a plurality of pixels each having gray-scale values associated therewith,
comprising the steps of:
a) supplying said plurality of pixels to a prediction means (54);
b) predicting a gray-scale value of each of said plurality of pixels;
c) subtracting said predicted gray-scale value from said actual gray-scale value of each of said pixels wherein a plurality of difference values are generated;
d) assigning a confidence value to each of said difference values;
e) reordering said difference values according to their associated confidence values most likely to be the same value and storing them in a high confidence portion of a buffer memory means (184, 186) as reordered data for increasing the lengths of identical pixel;
f) generating run length encoded counts defined by said reordered difference values; and
g) supplying said generated run length encoded counts to a Huffman encoder (23) wherein said digitized video image data is further compressed.

6. The method as set forth in claim 5, further comprising the steps of:
arranging said video image data in columns of digitized video image data;
transposing said columns of digitized video image data into rows of digitized image data, and
outputting said transposed columns of said digitized video image data to supply said prediction means (54).

7. The method as set forth in claim 5 or 6, further comprising the steps of: associating each of said difference values with one of said confidence values, and grouping all difference values having an associated high confidence value together before said step of generating run length encoded counts.

8. A data decompression apparatus for decompressing compressed image data having a plurality of pixels associated therewith, each of said plurality of pixels having a previously predicted and an actual gray-scale value associated therewith, said apparatus comprising
a Huffmann decoding means (27) for Huffmann decoding said compressed image data, and
a run generator (29) for examining the decoded Huffmann values and outputting a serial bit stream, said data decompression apparatus being characterised by a decompressor front end means (56) for formatting the serial bit stream into rows of two-bit reordered prediction differences,
a prediction means (54) receiving said compressed data for generating said predicted gray-scale value of each of said plurality of pixels and for determining a difference value between said predicted gray-scale value and said actual gray-scale value of each of said plurality of pixels and for assigning a confidence value to each of said pixels based on the differences,
a reorderer means (60) receiving said rows of two-bit reordered prediction differences from said decompressor front end means (56) and confidence values from said prediction means (54) for storing rows of pixels into one of at least two buffer memory means (184, 186),
means for reading stored pixel prediction differences from the other of said at least two buffer memory means (184, 186) at pixel addresses depending on the associated confidence values while storing said rows of pixels into the one memory means, and
feed-back means (70, 52) for feeding-back said reordered prediction difference values to said predicition means (54),
wherein said prediction means (54) comprises a gate means (146) for performing an Exclusive-OR operation between said difference values and associated prediction table address contents to produce decompressed output data on an output means (90).

9. A method for the decompression of compressed image data having a plurality of pixels associated therewith, each of said plurality of pixels having a previously predicted and an actual gray-scale value associated therewith, comprising the steps of:
Huffmann decoding said compressed image data;
examining the decoded Huffmann values by a run generator (29) and outputting a serial bit stream;
formatting the serial bit stream into rows of two-bit reordered prediction differences;
in a prediction means (54) generating said predicted gray-scale value of each of said plurality of pixels and determining a difference value between said predicted gray-scale value and said actual gray-scale value of each of said plurality of pixels and assigning a confidence value to each of said pixels based on the differences;
on the basis of said rows of two-bit reordered prediction differences and confidence values from said prediction means (54), storing rows of pixels into one of buffer memory means (184, 186);
reading stored pixel prediction differences from the other of said memory means (184, 186) at pixel addresses depending on the associated confidence values while storing said rows of pixels into the one memory means;
feeding-back said reordered prediction difference values to said predicition means (54); and
wherein in said prediction means (54) an Exclusive-OR operation between said difference values and associated prediction table address contents is performed to produce decompressed output data on an output means (90).

## Patentansprüche

1. Datenkompressionsvorrichtung (25) zum Komprimieren von Bilddaten mit mehreren zugeordneten Bildpunkten, welche in mehreren Spalten (65, 67) angeordnet sind, die jede einzeln einer einzelnen vertikalen Abtastung des Bildes zugeordnet sind, und mit mehreren zugeordneten Bildpunktzeilen (73), wobei jede der Bildpunktzeilen und Bildpunktspalten einzelne Bildpunkte der Bilddaten aufweist, wobei jeder der einzelnen Bildpunkte einen zugeordneten Graustufenwert aufweist,
wobei die Vorrichtung umfaßt:
eine Umstelleinrichtung (50) zum Speichern der Bilddaten als eine Mehrzahl von Spalten einzelner Bildpunkte der Daten in einer Speichereinrichtung (64) und zum Ausgeben der Bildpunkte der Daten aus der Speichereinrichtung (64) als einzelne Bildpunkte von Daten, welche der gleichen Zeile jeder der Spalten der einzelnen Bildpunkte der Daten zugeordnet sind,
gekennzeichnet durch
eine Vorhersageeinrichtung (54) zum Vorhersagen eines Graustufenwertes für jeden der einzelnen Bildpunkte und zum Bestimmen eines Differenzwertes zwischen dem vorhergesagten Graustufenwert und einem tatsächlich erfaßten Graustufenwert und zum Zuordnen eines Vertrauenswertes zu jedem der Bildpunkte basierend auf den Differenzen, und
eine Neuordnungseinrichtung (60) zum Empfangen der Vertrauenswerte und der Graustufen-Differenzwerte und zum Neuordnen der Differenzwerte entsprechend der zugeordneten Vertrauenswerte, die am wahrscheinlichsten der gleiche Wert sind, und Speichern dieser in einem hochvertraulichen Abschnitt einer PufferSpeichereinrichtung (184, 186) als neugeordnete Daten zum Erhöhen der Lauflängen identischer Bildpunkte und Verbessern der Kompression (23) des Ausgangssignals der Datenkompressionsvorrichtung (25).

2. Vorrichtung nach Anspruch 1,
bei welcher die Umstelleinrichtung (30) eine Umstell-Steuerung (122) umfaßt, welche an die Speichereinrichtung (64) gekoppelt ist zum Bestimmen einer der zugeordneten Zeilen zu jeder Datenspalte und zum Bewirken, daß ein in derselben Zeile für jede der Spalten enthaltener, einzelner Bildpunkt zu der Vorhersageeinrichtung (54) ausgegeben wird.

3. Vorrichtung nach Anspruch 1 oder 2,
bei welcher die Neuordnungseinrichtung (60) eine Neuordnungssteuerung (170) umfaßt, welche an die Pufferspeichereinrichtung (184, 186) gekoppelt ist, zum Empfangen der Differenzwerte und der zugeordneten Vertrauenswerte von der Vorhersageeinrichtung (54) und zum Plazieren jedes der Differenzwerte in der Pufferspeichereinrichtung (184, 186) an Positionen darin, welche durch die zugeordneten Vertrauenswerte bestimmt sind.

4. Vorrichtung nach Anspruch 3, mit einer Lauflängen-Zähleinrichtung (62), welche an den Ausgang der Neuordnungseinrichtung (60) angeschlossen ist, zum Erzeugen mehrerer lauflängenkodierter Zählungen, wie durch die neugeordneten Differenzen bestimmt.

5. Verfahren für die Kompression digitalisierter Videobilddaten, wobei die Bilddaten mehrere Bildpunkte enthalten, von denen jeder zugeordnete Graustufenwerte aufweist,
mit den Schritten:
a) Abgeben der Mehrzahl der Bildpunkte zu einer Vorhersageeinrichtung (54);
b) Vorhersagen eines Graustufenwertes für jeden der Bildpunkte;
c) Subtrahieren des vorhergesagten Graustufenwertes von dem tatsächlichen Graustufenwert von jedem der Bildpunkte, wobei mehrere Differenzwerte erzeugt werden;
d) Zuordnen eines Vertrauenswertes zu jedem der Differenzwerte;
e) Neuordnen der Differenzwerte entsprechend ihrer zugeordneten Vertrauenswerte, welche am wahrscheinlichsten die gleichen Werte sind, und Speichern dieser in einem hochvertraulichen Abschnitt einer Pufferspeichereinrichtung (184, 186) als neugeordnete Daten zum Erhöhen der Längen identischer Bildpunkte;
f) Erzeugen von lauflängenkodierten Zählungen, welche durch die neugeordneten Differenzwerte bestimmt sind; und
g) Abgeben der erzeugten, lauflängenkodierten Zählungen zu einem Huffmann-Kodierer (23), in welchem die digitalisierten Videobilddaten weiter komprimiert werden.

6. Verfahren nach Anspruch 5, mit den Schritten:
Anordnen der Videobilddaten in Spalten digitalisierter Videobilddaten;
Umstellen der Spalten digitalisierter Videobilddaten in Zeilen digitalisierter Bilddaten, und
Ausgeben der umgestellten Spalten der digitalisierten Videobilddaten zur Abgabe an die Vorhersageeinrichtung (54).

7. Verfahren nach Anspruch 5 oder 6, mit den Schritten:
Zuordnen von jedem der Differenzwerte zu einem der Vertrauenswerte und
Zusammenfassen sämtlicher Differenzwerte mit einem zugeordneten hohen Vertrauenswert vor dem Schritt der Erzeugung der lauflängenkodierten Zählungen.

8. Datendekompressionsvorrichtung zum Dekomprimieren komprimierter Bilddaten mit mehreren zugeordneten Bildpunkten,
wobei jedem der Bildpunkte ein vorhergesagter und ein tatsächlicher Graustufenwert zugeordnet ist, wobei die Vorrichtung umfaßt:
eine Huffmann-Dekodierungseinrichtung (27) zur Huffmann-Dekodierung der komprimierten Bilddaten, und
einen Laufgenerator (29) zum Prüfen der dekodierten Huffmann-Werte und Ausgeben einer seriellen Bitfolge, wobei die Datendekompressionsvorrichtung gekennzeichnet ist durch
ein Dekomprimierer-Vorderende (56) zum Formatieren der seriellen Bitfolge in Zeilen von neugeordneten Zwei-Bit-Vorhersage-Differenzen,
eine Vorhersageeinrichtung (54), welche die komprimierten Daten empfängt, zum Erzeugen des vorhergesagten Graustufenwertes für jeden der Bildpunkte und zum Bestimmen eines Differenzwertes zwischen dem vorhergesagten Graustufenwert und dem tatsächlichen Graustufenwert für jeden der Bildpunkte und zum Zuordnen eines Vertrauenswertes zu jedem der Bildpunkte, basierend auf den Differenzen,
eine Neuordnungseinrichtung (60), welche die Spalten der neugeordneten Zwei-Bit-Vorhersagedifferenzen von dem Dekomprimierer-Vorderende (56) und
Vertrauenswerte von der Vorhersageeinrichtung (54) empfängt, zum Speichern der Spalten der Bildpunkte in einer von wenigstens zwei Pufferspeicher-Einrichtungen (184, 186),
eine Einrichtung zum Lesen gespeicherter Bildpunkt-Vorhersagedifferenzen von der anderen der wenigstens zwei Pufferspeichereinrichtungen (184, 186) an Bildpunktadressen, abhängig von den zugeordneten Vertrauenswerten während des Speicherns der Spalten der Bildpunkte in der einen Speichereinrichtung, und eine Rückkopplungseinrichtung (70, 52) zum Zurückkoppeln der neugeordneten Vorhersagedifferenzwerte zu der Vorhersageeinrichtung (54),
wobei die Vorhersageeinrichtung (54) ein Gate (146) zum Ausführen einer Exklusiv-OR-Verknüpfung der Differenzwerte und der zugeordneten Vorhersagetabellen-Adreßinhalte zum Erzeugen dekomprimierter Ausgangsdaten in einer Ausgabeeinrichtung (90) umfaßt.

9. Verfahren zur Dekomprimierung komprimierter Bilddaten mit mehreren zugeordneten Bildpunkten,
wobei jedem der Bildpunkte ein vorab vorhergesagter und ein tatsächlicher Graustufenwert zugeordnet ist, mit den Schritten:
Huffmann-Dekodieren der komprimierten Bilddaten;
Prüfen der dekodierten Huffmann-Werte durch einen Laufgenerator (29) und Ausgeben einer seriellen Bitfolge;
Formatieren der seriellen Bitfolge in Spalten von neugeordneten Zwei-Bit-Vorhersagedifferenzen;
Erzeugen des vorhergesagten Graustufenwertes für jeden der Bildpunkte und Bestimmen eines Differenzwertes zwischen dem vorhergesagten Graustufenwert und dem tatsächlichen Graustufenwert jedes der Bildpunkte und Zuordnen eines Vertrauenswertes zu jedem der Bildpunkte basierend auf den Differenzen in einer Vorhersageeinrichtung (54);
Speichern von Spalten von Bildpunkten in einer der Pufferspeichereinrichtungen (184, 186) auf der Basis der Spalten der neugeordneten Zwei-Bit-Vorhersagedifferenzen und Vertrauenswerte von der Vorhersageeinrichtung (54);
Lesen gespeicherter Bildpunkt-Vorhersagedifferenzen aus der anderen der Speichereinrichtungen (184, 186) bei Bildpunktadressen abhängig von den zugeordneten Vertrauenswerten während der Speicherung der Spalten der Bildpunkte in der einen Speichereinrichtung;
Zurückkoppeln der neugeordneten Vorhersage-Differenzwerte zu der Vorhersageeinrichtung (54); und
wobei in der Vorhersageeinrichtung (54) eine Exklusiv-OR-Verknüpfung zwischen den Differenzwerten und den zugeordneten Vorhersagetabellen-Adreßinhalten zum Erzeugen dekomprimierter Ausgangsdaten in einer Ausgabeeinrichtung (90) ausgeführt wird.

## Revendications

1. Dispositif de compression de données (25) pour comprimer des données d'image ayant plusieurs pixels associés à celles-ci qui sont agencés dans plusieurs colonnes (65, 67) chacune étant associée uniquement à un balayage vertical unique de ladite image et ayant plusieurs rangées de pixels (73) associées à celle-ci, chacune desdites rangées de pixels et desdites colonnes de pixels comportant des pixels uniques desdites données d'images, chacun desdits pixels uniques ayant une valeur d'échelle de gris associée à celui-ci, ledit dispositif comportant
des moyens de conversion (50) pour mémoriser dans des moyens de mémoire (64) lesdites données d'images sous la forme de plusieurs colonnes de pixels uniques de données et pour émettre à partir desdits moyens de mémoire (64) lesdits plusieurs pixels de données en tant que pixels uniques de données associés à la même rangée de chacune desdites colonnes de pixels uniques de données,
caractérisé de plus en ce que des moyens de prévision (54) prévoient une valeur d'échelle de gris pour chacun desdits pixels uniques et déterminent une valeur de différence entre ladite valeur d'échelle de gris prévue et une valeur réelle d'échelle de gris détectée et attribuent une valeur fiable à chacun desdits pixels sur la base des différences, et
des moyens réordonnateurs (60) reçoivent lesdites valeurs fiables et lesdites valeurs de différence d'échelle de gris et réordonnent lesdites valeurs de différence selon leurs valeurs fiables associées ayant le plus vraisemblablement la même valeur et les mémorisent dans une partie très fiable de moyens de mémoire tampon (184, 186) en tant que données réordonnées pour augmenter les longueurs d'exploitation de pixels identiques et améliorer la compression (23) de la sortie dudit dispositif de compression de données (25).

2. Dispositif selon la revendication 1, dans lequel lesdits moyens de conversion (30) comportent une commande de conversion (122) reliée auxdits moyens de mémoire (64) pour définir une desdites rangées associées à chaque colonne de données, et pour amener un pixel unique contenu dans la même rangée pour chacune desdites colonnes, à être émis vers lesdits moyens de prévision (54).

3. Dispositif selon la revendication 1 ou 2, dans lequel lesdits moyens réordonnateurs (60) comportent une commande de réordonnateur (170) reliée auxdits moyens de mémoire tampon (184, 186) pour recevoir lesdites valeurs de différence et lesdites valeurs fiables associées provenant desdits moyens de prévision (54) et pour placer chacune desdites valeurs de différence dans lesdits moyens de mémoire tampon (184, 186) à des emplacements déterminés selon lesdites valeurs fiables associées.

4. Dispositif selon la revendication 3, comportant de plus des moyens de compteur de longueur d'exploitation (62) reliés à la sortie desdits moyens réordonnateurs (60) pour produire plusieurs comptes codés de longueur d'exploitation tels que définis par lesdites différences réordonnées.

5. Procédé de compression de données d'image vidéo numérisée, lesdites données d'image contenant plusieurs pixels ayant chacun une valeur d'échelle gris associée,
comportant les étapes consistant à :
a) envoyer lesdits plusieurs pixels vers des moyens de prévision (54),
b) prévoir une valeur d'échelle de gris de chacun desdits plusieurs pixels,
c) soustraire ladite valeur d'échelle de gris prévue de ladite valeur réelle d'échelle de gris de chacun desdits pixels, plusieurs valeurs de différence étant produites,
d) attribuer une valeur fiable à chacune desdites valeurs de différence,
e) réordonner lesdites valeurs de différence selon leurs valeurs fiables associées ayant le plus vraisemblablement la même valeur et les mémoriser dans une partie très fiable de moyens de mémoire tampon (184, 186) sous la forme de données réordonnées pour augmenter les longueurs d'exploitation de pixels identiques,
f) produire des comptes codés de longueur d'exploitation définis par lesdites valeurs de différence réordonnées, et
g) envoyer lesdits comptes codés de longueur d'exploitation produits vers un codeur Huffman (23) dans lequel lesdites données d'image vidéo numérisée sont encore comprimées.

6. Procédé selon la revendication 5, comportant de plus les étapes consistant à :
agencer lesdites données d'image vidéo dans des colonnes de données d'image vidéo numérisée,
convertir lesdites colonnes de données d'image vidéo numérisée en rangées de données d'image numérisée, et
émettre lesdites colonnes converties desdites données d'image vidéo numérisée pour les envoyer vers lesdits moyens de prévision (54).

7. Procédé selon la revendication 5 ou 6, comportant de plus les étapes consistant à : associer chacune desdites valeurs de différence à une desdites valeurs fiables, et regrouper toutes les valeurs de différence ayant une valeur très fiable associée, avant ladite étape de production de comptes codés de longueur d'exploitation.

8. Dispositif de décompression de données pour décomprimer des données d'image comprimées ayant plusieurs pixels associés à celles-ci, chacun desdits plusieurs pixels ayant une valeur de gris d'échelle prévue au préalable et une valeur réelle associée à celui-ci, ledit dispositif comportant
des moyens de décodage Huffman (27) pour effectuer un décodage Huffman desdites données d'image comprimées, et
un générateur d'exploitation (29) pour examiner les valeurs Huffman décodées et émettre un train de binaires série, ledit dispositif de décompression de données étant caractérisé par
des moyens d'entrée de dispositif de décompression (56) pour formater le train de binaires série en rangées de différences de prévision réordonnées de deux bits,
des moyens de prévision (54) recevant lesdites données comprimées pour produire ladite valeur d'échelle de gris prévue de chacun desdits plusieurs pixels et pour déterminer une valeur de différence entre ladite valeur d'échelle de gris prévue et ladite valeur réelle d'échelle de gris de chacun desdits plusieurs pixels et pour attribuer une valeur fiable à chacun desdits pixels sur la base des différences,
des moyens réordonnateurs (60) recevant lesdites rangées de différences de prévision réordonnées de deux bits provenant desdits moyens d'entrée de dispositif de décompression (56) et des valeurs fiables provenant desdits moyens de prévision (54) pour mémoriser des rangées de pixels dans des premiers moyens parmi au moins deux moyens de mémoire tampon (184, 186),
des moyens pour lire les différences de prévision de pixels mémorisées à partir de l'autre desdits au moins deux moyens de mémoire tampon (184, 186) à des adresses de pixel fonction des valeurs fiables associées tout en mémorisant lesdites rangées de pixels dans les premiers moyens de mémoire, et des moyens de rétroaction (70, 52) pour effectuer une rétroaction desdites valeurs de différence de prévision réordonnées vers lesdits moyens de prévision (54),
lesdits moyens de prévision (54) comportant des moyens de porte (146) pour effectuer une opération OU exclusif entre lesdites valeurs de différence et lesdits contenus d'adresse de table de prévision associés pour produire des données de sortie décomprimées sur des moyens de sortie (90).

9. Procédé de décompression de données d'image comprimées ayant plusieurs pixels associés à celles-ci, chacun desdits plusieurs pixels ayant une valeur d'échelle de gris prévue au préalable et une valeur réelle associée à celui-ci, comportant les étapes consistant à :
effectuer un décodage Huffman desdites données d'image comprimées,
examiner les valeurs Huffman décodées par un générateur d'exploitation (29) et émettre un train de binaires série,
formater le train de binaires série en rangées de différences de prévision réordonnées de deux bits,
produire dans des moyens de prévision (54) ladite valeur d'échelle de gris prévue de chacun desdits plusieurs pixels et déterminer une valeur de différence entre ladite valeur d'échelle de gris prévue et ladite valeur réelle d'échelle de gris de chacun desdits plusieurs pixels et attribuer une valeur fiable à chacun desdits pixels sur la base des différences ; sur la base desdites rangées de différences de prévision réordonnées de deux bits et des valeurs fiables provenant desdits moyens de prévision (54), mémoriser des rangées de pixels dans un parmi des moyens de mémoire tampon (184, 186),
lire les différences de prévision de pixel mémorisées à partir de l'autre desdits moyens de mémoire (184, 186) au niveau d'adresses de pixel fonction des valeurs fiables associées tout en mémorisant lesdites rangées de pixels dans les premiers moyens de mémoire,
effectuer une rétroaction desdites valeurs de différence de prévision réordonnées vers lesdits moyens de prévision (54), et
dans lesdits moyens de prévision (54), une opération OU exclusif entre lesdites valeurs de différence et lesdits contenus d'adresse de table de prévision associés étant réalisée pour produire des données de sortie décomprimées sur des moyens de sortie (90).
